# EUROPÄISCHE PATENTSCHRIFT

(11) **EP 3 360 196 B1**
(45) Veröffentlichungstag und Bekanntmachung des Hinweises auf die Patenterteilung: **28.07.2021**
(21) Anmeldenummer: 16763056.5
(22) Anmeldetag: 09.09.2016
(51) Int. Cl.: H01M 10/653, H01M 10/6556, H01M 10/655, C08G 59/42, C08L 63/00, C08K 3/36, C08L 83/04, C09D 163/00, C08K 3/22, C08K 3/38

(54) **BATTERIESYSTEM MIT VERGUSSMASSE**
BATTERY SYSTEM WITH POTTING COMPOUND
SYSTÈME DE BATTERIE COMPRENANT UNE MATIÈRE D'ENROBAGE

(30) Priorität: 06.10.2015 DE 102015219280
(43) Veröffentlichungstag der Anmeldung: 15.08.2018
(73) Patentinhaber: Robert Bosch GmbH, 70442 Stuttgart (DE)
(72) Erfinder: SCHUETT, Klaus-Volker, 73249 Wernau (DE); RAEDLER, Michael, 22087 Hamburg (DE); WEISS, Mattis Simeon, 71336 Waiblingen (DE); GERSCHWITZ, Thomas, 71735 Eberdingen (DE); BIRKHOLD, Andreas, 70771 Leinfelden-Echterdingen (DE); JENNRICH, Irene, 71394 Kernen-Stetten (DE)
(86) Internationale Anmeldenummer: PCT/EP2016/071313
(87) Internationale Veröffentlichungsnummer: WO 2017/060038

(56) Entgegenhaltungen:
- EP-A1- 1 835 251
- WO-A1-2007/004184
- DE-A1-102007 010 748
- DE-A1-102007 063 179
- DE-A1-102010 046 530
- US-A1- 2010 136 413
- US-A1- 2011 244 245

## Beschreibung

Die vorliegende Erfindung betrifft ein Verfahren zur Herstellung eines Batteriesystems und ein Batteriesystem.

### Stand der Technik

Batteriesysteme aus mehreren Batteriezellen werden unter anderem in Elektrofahrzeugen oder Hybridelektrofahrzeugen eingesetzt. Die Batteriezellen können dabei in Kunststofffolien verpackt oder lackiert sein. Kunststoffe weisen jedoch in der Regel eine geringe Wärmeleitfähigkeit, beispielsweise von etwa 0,2 bis 0,4 W/(m·K), auf. Zudem weisen Kunststofffolien oder Lacke in der Regel eine geringe Abriebfestigkeit auf.

Die Druckschriften DE 10 2007 010 748 A1 und DE 10 2007 010 751 A1 betreffen Batteriegehäuse.

Die Druckschrift DE 10 2007 063 179 A1 betrifft eine Batterie als Flachzellenverbund mit einer Wärmeleitplatte.

Weiterhin ist aus der US 2010/136413 A1 ein Verfahren zur Verkapselung von Batteriepacks bekannt. Dabei weist der Batteriepack ein Gehäuse mit Injektionsöffnung für ein Verkapselungsmaterial auf.

Darüber hinaus ist aus der WO 2007/004184 A1 die Verwendung eines thermisch expandierbaren Materials bekannt, welches ein Epoxidharz enthält.

### Offenbarung der Erfindung

Gegenstand der vorliegenden Erfindung ist ein Verfahren zur Herstellung eines Batteriesystems.

In dem Verfahren werden Batteriezellen, durch mindestens ein Montagegitter zur Positionierung von Batteriezellen und/oder durch Positionsrippen und/oder Positionsvorsprünge im Innenraum eines Batteriesystemgehäuses oder einer Vergussform, welche zur Positionierung von Batteriezellen ausgelegt sind, und/oder durch einen Montagegreifer zur Positionierung von Batteriezellen positioniert und zumindest teilweise mit mindestens einer Vergussmasse vergossen.

Zum Beispiel kann das Verfahren zur Herstellung eines Batteriemoduls und/oder Batteriepacks ausgelegt sein. Beispielsweise kann das Verfahren zur Herstellung eines Lithium-Batteriesystems, beispielsweise eines Lithium-Batteriemoduls und/oder ein Lithium-Batteriepacks, zum Beispiel eines Lithium-Ionen-Batteriemoduls und/oder ein Lithium-Ionen-Batteriepacks, ausgelegt sein. Dabei können die Batteriezellen insbesondere Lithium-Zellen, zum Beispiel Lithium-Ionen-Zellen, sein. Zum Beispiel können die Batteriezellen jeweils ein, insbesondere festes beziehungsweise starres, beispielsweise metallisches, Zellgehäuse aufweisen. Beispielsweise können die Batteriezellen, insbesondere prismatische, Gehäusezellen, so genannte Hard-Case-Zellen (Englisch: Hard Case Cells), zum Beispiel prismatische Zellen, sein.

Durch die mindestens eine Vergussmasse kann vorteilhafterweise eine verbesserte Wärmeableitung beziehungsweise Entwärmung und beispielsweise auch eine verbesserte Temperierung sowie eine verbesserte elektrische Isolierung und eine verbesserte elektrische Durchschlagsfestigkeit der Batteriezellen beziehungsweise des Batteriesystems, beispielsweise in Form eines Batteriemoduls und/oder Batteriepacks, erzielt werden. Dadurch kann wiederum vorteilhafterweise die Lebensdauer und auch die Leistungsfähigkeit und Sicherheit der Batteriezellen beziehungsweise des Batteriesystems erhöht werden.

Darüber hinaus kann durch die mindestens eine Vergussmasse vorteilhafterweise ein mechanischer Schutz, beispielsweise gegenüber Erschütterungen und/oder gegenüber Abrieb, beispielsweise Metallabrieb, und/oder Abrasionsverschleiß, zum Beispiel unter mechanischer Beanspruchung, wie unter Schüttelbelastung, und/oder eine Stoßdämpfung realisiert werden. Zum Beispiel kann durch die Vergussmasse bewirkt werden, dass Partikel, wie Metallpartikel, Staub, Schmutz, et cetera, welche gegebenenfalls im Fertigungsprozess auf den Oberflächen der Batteriezellen beziehungsweise der Gehäusewandung anhaften könnten, von der Vergussmasse quasi geschluckt werden und dadurch nicht mehr direkt abrasiv einwirken und/oder dass während des Betriebs keine Partikel mehr in Zwischenspalte eindringen können, wodurch die Abriebbeständigkeit deutlich verbessert werden kann. Auf diese Weisen können vorteilhafterweise die Lebensdauer, Leistungsfähigkeit und Sicherheit der Batteriezellen und damit des Batteriesystems verbessert werden.

Zudem können durch die mindestens eine Vergussmasse die Batteriezellen beziehungsweise das Batteriesystem vor äußeren Einflüssen, beispielsweise gegenüber Medien, wie Elektrolyt, Wasserdampf, Feuchtigkeit und/oder Lösungsmitteln, geschützt und auch auf diese Weise die Lebensdauer, Leistungsfähigkeit und Sicherheit der Batteriezellen und damit des Batteriesystems verbessert werden.

Darüber hinaus können durch die mindestens eine Vergussmasse, insbesondere in Kombination mit dem mindestens einen Montagegitter, den Positionsrippen und/oder Positionsvorsprüngen beziehungsweise dem Montagegreifer, vorteilhafterweise Fertigungstoleranzen der Bauteile, beispielsweise der Bauhöhen der Batteriezellen, ausgeglichen werden. Das mindestens eine Montagegitter, die Positionsrippen und/oder Positionsvorsprüngen beziehungsweise der Montagegreifer können dabei insbesondere als Montagehilfen dienen, durch welche vorteilhafterweise eine Nivellierung der Batteriezellen erzielt und dadurch in Kombination mit der mindestens einen Vergussmasse vorteilhafterweise ein Toleranzausgleich erzielt werden kann.

Durch das mindestens eine Montagegitter, die Positionsrippen und/oder Positionsvorsprüngen beziehungsweise den Montagegreifer und/oder die mindestens eine Vergussmasse kann zudem vorteilhafterweise der Verbau vereinfacht und zudem eine hohe Flexibilität in der Bauform und damit eine Umsetzung in unterschiedlichen Anwendungen ermöglicht werden.

Ferner kann das Verfahren vorteilhafterweise mit einer geringere Anzahl von Prozessschritten und geringen Kosten durchgeführt und beispielsweise ein Batteriesystem aus mehreren Batteriezellen, zum Beispiel ein Modul und/der Pack aus mehreren Zellen, in einem Arbeitsgang hergestellt werden.

Insgesamt so vorteilhafterweise ein Batteriesystem mit einer verbesserten Lebensdauer, Leistungsfähigkeit und Sicherheit auf einfache und kostengünstige Weise hergestellt werden.

Im Rahmen einer Ausführungsform werden die Batteriezellen in einen Innenraum eines beziehungsweise des Batteriesystemgehäuses oder einer beziehungsweise der Vergussform eingebracht und/oder der Innenraum des Batteriesystemgehäuses beziehungsweise der Vergussform zumindest teilweise mit mindestens einer Vergussmasse gefüllt.

Zum Beispiel kann der Innenraum des Batteriesystemgehäuses beziehungsweise der Vergussform zumindest teilweise, beispielsweise - insbesondere im Wesentlichen - vollständig, mit mindestens einer Vergussmasse aufgefüllt werden. Beispielsweise kann der Innenraum des Batteriesystemgehäuses beziehungsweise der Vergussform zunächst teilweise mit einer später erläuterten ersten Vergussmasse gefüllt und dann, beispielsweise - insbesondere im Wesentlichen - vollständig, mit einer später erläuterten zweiten Vergussmasse aufgefüllt werden, oder der Innenraum des Batteriesystemgehäuses beziehungsweise der Vergussform kann beispielsweise zunächst teilweise mit einem später erläuterten Halbzeug gefüllt und dann, beispielsweise - insbesondere im Wesentlichen - vollständig, mit der mindestens einen Vergussmasse aufgefüllt werden.

Insofern beim Füllen des Innenraums des Batteriesystemgehäuses beziehungsweise der Vergussform die Batteriezellen beziehungsweise die später erläuterte mindestens eine Temperiermittelleitung zumindest teilweise mit Vergussmasse vergossen werden, können die Batteriezellen beziehungsweise die mindestens eine Temperiermittelleitung insbesondere vor dem Vergießen mit Vergussmasse in den Innenraum des Batteriesystemgehäuses oder der Vergussform eingebracht werden. Insbesondere nach dem Einbringen und Positionieren der Batteriezellen beziehungsweise der mindestens einen Temperiermittelleitung kann (dann) der Innenraum des Batteriesystemgehäuses beziehungsweise der Vergussform zumindest teilweise mit mindestens einer Vergussmasse gefüllt, beispielsweise aufgefüllt, werden.

Insofern beim Füllen des Innenraums des Batteriesystemgehäuses beziehungsweise der Vergussform die Batteriezellen (zunächst) nicht mit Vergussmasse vergossen werden, beispielsweise insofern - wie später erläutert - (zunächst) lediglich mindestens ein temperiermittelbeabstandender Zwischenraum, beispielsweise in dem die mindestens eine Temperiermittelleitung angeordnet werden kann, mit einer ersten Vergussmasse und (dann erst) die Batteriezellen beziehungsweise mindestens ein batteriezellenbeabstandender Zwischenraum und/oder mindestens ein gehäuse- oder vergussformbeabstandender Zwischenraum mit einer zweiten Vergussmasse gefüllt wird, können die Batteriezellen beispielsweise auch nach dem Vergießen mit der ersten Vergussmasse in den Innenraum des Batteriesystemgehäuses oder der Vergussform eingebracht werden. Die mindestens eine Temperiermittelleitung kann dabei insbesondere vor dem Vergießen mit der ersten Vergussmasse in den Innenraum des Batteriesystemgehäuses oder der Vergussform eingebracht werden.

Das Batteriesystem weist ein Batteriesystemgehäuse mit einem Innenraum zur Aufnahme von Batteriezellen auf. Das Batteriesystemgehäuse kann beispielsweise aus Kunststoff ausgebildet, zum Beispiel ein Kunststoffgehäuse, oder aus Metall ausgebildet, zum Beispiel ein Metallgehäuse, sein. Zum Beispiel kann das Batteriesystemgehäuse, beispielsweise das Metallgehäuse, durch Tiefziehen, Fließpressen und/oder Druckgießen, et cetera, hergestellt werden beziehungsweise sein und/oder eine, beispielsweise durch vernieten, verlöten, verschweißen, verkleben und/oder verstemmen, et cetera, zusammengesetzte Bauform aufweisen.

Das mindestens eine Montagegitter kann insbesondere aus Kunststoff ausgebildet sein.

Insofern die Batteriezellen durch das mindestens eine Montagegitter positioniert werden, ist es sowohl möglich die Batteriezellen und das mindestens eine Montagegitter (zunächst) in den Innenraum des Batteriesystemgehäuses oder der Vergussform einzubringen und (dann) zu positionieren und (dann) zu vergießen als auch insbesondere (zunächst) die Batteriezellen durch das mindestens eine Montagegitter (vor) zu positionieren und (dann) die durch das mindestens eine Montagegitter (vor-)positionierten Batteriezellen in den Innenraum des Batteriesystemgehäuses oder der Vergussform einzubringen und (dann) zu vergießen. Durch das mindestens eine Montagegitter können die Batteriezellen in beiden Fällen positioniert beziehungsweise ausgerichtet und/oder auf Position gehalten werden. Das mindestens eine Montagegitter kann vorteilhafterweise unter anderem zudem eine Berührung der Batteriezellen mit dem Batteriesystemgehäuse, zum Beispiel in Form eines Metallgehäuses, verhindern. Insofern die Batteriezellen durch das mindestens eine Montagegitter, insbesondere aus Kunststoff, positioniert werden, kann das Batteriesystemgehäuse insbesondere sowohl ein Metallgehäuse als auch ein Kunststoffgehäuse sein.

Insofern die Batteriezellen durch die Positionsrippen und/oder Positionsvorsprünge des Batteriesystemgehäuses oder der Vergussform positioniert werden, können die Batteriezellen, insbesondere direkt, beim Einbringen, beispielsweise Einsetzen, in den Innenraum des Batteriesystemgehäuses oder der Vergussform durch die darin integrierten Positionsrippen und/oder Positionsvorsprünge positioniert beziehungsweise ausgerichtet und/oder auf Position gehalten werden und (dann) vergossen werden. So können vorteilhafterweise gleichmäßige Vergussspalte um die Zellen realisiert werden. Insofern die Batteriezellen durch Positionsrippen und/oder Positionsvorsprünge des Batteriesystemgehäuses positioniert werden, kann das Batteriesystemgehäuse insbesondere ein Kunststoffgehäuse sein.

Insofern die Batteriezellen durch den Montagegreifer positioniert werden, können die Batteriezellen beispielsweise durch den Montagegreifer in dem Innenraum des Batteriesystemgehäuses oder der Vergussform positioniert und (dann) vergossen werden.

Insofern die Batteriezellen in den Innenraum eines Batteriesystemgehäuses, beispielsweise eines Kunststoffgehäuses oder eines Metallgehäuses, eingebracht werden, können die Batteriezellen vorteilhafterweise, insbesondere direkt, in dem Batteriesystemgehäuse vergossen werden. Nach dem Aushärten der mindestens einen Vergussmasse können dann die Batteriezellen, die mindestens eine Vergussmasse und das Batteriesystemgehäuse, insbesondere die Batteriezellen, die mindestens eine Vergussmasse und das Batteriesystemgehäuse sowie beispielsweise weitere Bauteile, wie das mindestens eine Montagegitter und/oder die Positionsrippen und/oder Positionsvorsprünge und/oder die mindestens eine Temperiermittelleitung und/oder das später erläuterte Halbzeug, eine die Batteriezellen umfassende Vergussmasseneinheit bilden. Dabei kann das Batteriesystemgehäuse mindestens ein Montagemittel, beispielsweise Montagelaschen und/oder Montagewinkeln und/oder einer Montageplatte aufweisen, durch welches es an einer Haltevorrichtung, beispielsweise einer Halteplatte oder einem Halterahmen, zum Beispiel eines Fahrzeugs, beispielsweise eines Elektro- und/oder Hybridfahrzeugs, und/oder an einem Temperierelement, beispielsweise einer Temperierplatte, zum Beispiel einem Kühlelement oder einer Kühlplatte, montiert, zum Beispiel verschraubt, verklemmt, vernietet und/oder verklebt, et cetera, werden kann.

Die Vergussform kann beispielsweise eine Wiederholform oder eine verlorene Form sein. Insbesondere kann die Vergussform eine Wiederholform sein.

Insofern die Batteriezellen in den Innenraum einer Vergussform eingebracht werden, können die Batteriezellen (zunächst) in der Vergussform vergossen werden. Nach dem Aushärten der mindestens einen Vergussmasse können dann die Batteriezellen und die mindestens eine Vergussmasse, insbesondere die Batteriezellen und die mindestens eine Vergussmasse sowie beispielsweise weitere Bauteile, wie das mindestens eine Montagegitter und/oder die Positionsrippen und/oder Positionsvorsprünge und/oder die mindestens eine Temperiermittelleitung und/oder das später erläuterte Halbzeug, eine, die Batteriezellen umfassende Vergussmasseneinheit bilden, welche aus der Vergussform gelöst beziehungsweise entfernt wird. Insofern die Vergussform eine Wiederholform ist, kann die Vergussform danach wiederverwendet werden.

Dabei kann die, die Batteriezellen umfassende Vergussmasseneinheit gegebenenfalls auch ohne zusätzliches Batteriesystemgehäuse eingesetzt werden. Beispielsweise kann die, die Batteriezellen umfassende Vergussmasseneinheit lediglich in einen Montagerahmen eingesetzt und/oder daran angebracht und/oder an einer Montageplatte und/oder an einer Haltevorrichtung, beispielsweise einer Halteplatte oder einem Halterahmen, zum Beispiel eines Fahrzeugs, beispielsweise eines Elektro- und/oder Hybridfahrzeugs, und/oder an einem Temperierelement, beispielsweise einer Temperierplatte, zum Beispiel einem Kühlelement oder einer Kühlplatte, montiert, zum Beispiel verschraubt, verklemmt, vernietet und/oder verklebt, et cetera, werden.

Die, die Batteriezellen umfassende Vergussmasseneinheit kann jedoch auch in ein Batteriesystemgehäuse, beispielsweise in ein Metallgehäuse oder ein Kunststoffgehäuse, beispielsweise welches mindestens ein Montagemittel, zum Beispiel Montagelaschen und/oder Montagewinkeln und/oder eine Montageplatte aufweist, eingesetzt werden. Mittels des mindestens einen Montagemittels kann dann das Batteriesystemgehäuse mit der darin eingesetzten Vergussmasseneinheit an einer Haltevorrichtung, beispielsweise einer Halteplatte oder einem Halterahmen, zum Beispiel eines Fahrzeugs, beispielsweise eines Elektro- und/oder Hybridfahrzeugs, und/oder an einem Temperierelement, beispielsweise einer Temperierplatte, zum Beispiel einem Kühlelement oder einer Kühlplatte, montiert, zum Beispiel verschraubt, verklemmt, vernietet und/oder verklebt, et cetera, werden.

Beispielsweise können durch das mindestens eine Montagegitter und/oder durch die Positionsrippen und/oder Positionsvorsprünge und/oder durch den Montagegreifer mindestens zwei Batteriezellen, beispielsweise mindestens fünf Batteriezellen, zum Beispiel mindestens sechs Batteriezellen, positioniert werden.

Im Rahmen einer weiteren, alternativen oder zusätzlichen Ausführungsform werden die Batteriezellen, insbesondere vor dem Vergießen mit Vergussmasse, beispielsweise vor, während oder nach dem Einbringen in den Innenraum, durch das mindestens eine Montagegitter und/oder durch die Positionsrippen und/oder Positionsvorsprünge und/oder durch den Montagegreifer unter Ausbildung mindestens eines batteriezellenbeabstandenden Zwischenraums beabstandet zueinander und/oder unter Ausbildung mindestens eines gehäuse- oder vergussformbeabstandenden Zwischenraums beabstandet zu einem beziehungsweise dem Batteriesystemgehäuse beziehungsweise zu einer beziehungsweise der Vergussform und/oder unter Ausbildung mindestens eines temperiermittelbeabstandenden Zwischenraums beabstandet zu einem beziehungsweise dem Temperiermittel, beispielsweise einer beziehungsweise der Temperierplatte und/oder Temperiermittelleitung, positioniert, wobei der mindestens eine batteriezellenbeabstandende Zwischenraum und/oder der mindestens eines gehäuse- oder vergussformbeabstandende Zwischenraum und/oder der mindestens eine temperiermittelbeabstandende Zwischenraum, insbesondere nach dem Einbringen und Positionieren der Batteriezellen sowie gegebenenfalls einer später erläuterten Temperiermittelleitung, mit mindestens einer Vergussmasse gefüllt wird.

Im Rahmen einer weiteren, alternativen oder zusätzlichen Ausführungsform werden die Batteriezellen, insbesondere vor, während oder nach dem Einbringen in den Innenraum des Batteriesystemgehäuses beziehungsweise der Vergussform, in das mindestens eine Montagegitter eingesteckt. Dabei können die Batteriezellen vorteilhafterweise durch das Einstecken in das mindestens eine Montagegitter positioniert werden.

Das mindestens eine Montagegitter kann beispielsweise wie im Zusammenhang mit dem erfindungsgemäßen Batteriesystem beschrieben ausgestaltet sein.

Beispielsweise kann dabei jeweils eine Batteriezelle in einer Gitteröffnung des mindestens einen Montagegitters eingesteckt werden. Zum Beispiel können die Batteriezellen dabei jeweils umfänglich von gitteröffnungsbildenden Gitterstegen des mindestens einen Montagegitters umgeben werden.

Im Rahmen einer Ausgestaltung dieser Ausführungsform werden die Batteriezellen in ein oberes Montagegitter zur Positionierung von Batteriezellen und/oder in ein unteres Montagegitter zur Positionierung von Batteriezellen eingesteckt. Insbesondere können die Batteriezellen in ein oberes Montagegitter zur Positionierung von Batteriezellen und in ein unteres Montagegitter zur Positionierung von Batteriezellen eingesteckt werden.

Im Rahmen einer weiteren, alternativen oder zusätzlichen Ausgestaltung dieser Ausführungsform wird, insbesondere vor dem Einbringen der Batteriezellen in den Innenraum des Batteriesystemgehäuses beziehungsweise der Vergussform, eine Montagegitter-Batteriezellen-Anordnung durch Einstecken der Batteriezellen in das mindestens eine Montagegitter, beispielsweise in das obere und/oder untere Montagegitter, ausgebildet, welche (dann) in den Innenraum des Batteriesystemgehäuses beziehungsweise der Vergussform eingebracht wird.

Die mindestens eine Vergussmasse kann dabei beispielsweise durch mindestens eine Vergussmasseneinlassöffnung in dem mindestens einen Montagegitter, insbesondere in dem oberen Montagegitter, beispielsweise welche in einem gitteröffnungsbildenden Gittersteg ausgebildet ist, eingefüllt werden.

Im Rahmen einer weiteren, alternativen oder zusätzlichen Ausführungsform werden die Batteriezellen, insbesondere während des Einbringens in den Innenraum des Batteriesystemgehäuses beziehungsweise der Vergussform, zwischen die Positionsrippen und/oder Positionsvorsprüngen in dem Innenraum des Batteriesystemgehäuses beziehungsweise der Vergussform eingesteckt. Dabei können die Batteriezellen vorteilhafterweise durch das Einstecken zwischen die Positionsrippen und/oder Positionsvorsprüngen in dem Innenraum des Batteriesystemgehäuses beziehungsweise der Vergussform positioniert werden.

Die Positionsrippen und/oder Positionsvorsprünge können beispielsweise wie im Zusammenhang mit dem erfindungsgemäßen Batteriesystem beschrieben ausgestaltet sein.

Im Rahmen einer weiteren, alternativen oder zusätzlichen Ausführungsform werden die Batteriezellen, insbesondere vor dem Einbringen in den Innenraum des Batteriesystemgehäuses beziehungsweise der Vergussform, von dem Montagegreifer ergriffen. Dabei können die Batteriezellen durch den Montagegreifer in den Innenraum des Batteriesystemgehäuse oder der Vergussform eingebracht werden. Dabei können die Batteriezellen vorteilhafterweise, insbesondere durch das Ergreifen von dem Montagegreifer und durch das Einbringen durch den Montagegreifer, positioniert werden.

Im Rahmen einer weiteren, alternativen oder zusätzlichen Ausführungsform wird, insbesondere vor dem Einbringen der Batteriezellen, weiterhin mindestens eine Temperiermittelleitung in den Innenraum des Batteriesystemgehäuses oder der Vergussform eingebracht. Beim Vergießen mit Vergussmasse kann (dann) insbesondere auch die mindestens eine Temperiermittelleitung zumindest teilweise mit mindestens einer Vergussmasse vergossen werden. Beispielsweise kann, insbesondere beim Vergießen mit Vergussmasse, die mindestens eine Temperiermittelleitung in Vergussmasse eingegossen werden. Die mindestens eine Temperiermittelleitung kann beispielsweise in Form einer Leitungsschlange oder eines Leitungsrohrs, zum Beispiel einer so genannten Kühlschlange, ausgebildet sein. So kann vorteilhafterweise auf einfache Weise eine Temperierung durch ein Temperiermittel in das Batteriesystem integriert werden.

Im Rahmen einer Ausgestaltung dieser Ausführungsform wird die mindestens eine Temperiermittelleitung seitlich und/oder unterhalb der Batteriezellen angeordnet. So kann vorteilhafterweise eine Seitenkühlung und/oder Bodenkühlung auf einfache Weise realisiert werden. Beispielsweise kann, insbesondere beim Vergießen mit Vergussmasse, die mindestens eine Temperiermittelleitung seitlich und/oder unterhalb der Batteriezellen in Vergussmasse eingegossen werden. So kann vorteilhafterweise eine hohe Wärmeableitung erzielt werden.

Beispielsweise kann die mindestens eine Temperiermittelleitung dabei zwischen Batteriezellen, insbesondere zwischen Seitenflächen der Batteriezellen, und einer Seitenwand des Batteriesystemgehäuses beziehungsweise der Vergussform, und/oder zwischen Batteriezellen, insbesondere zwischen Bodenflächen der Batteriezellen, und dem Boden des Batteriesystemgehäuses beziehungsweise der Vergussform angeordnet werden.

Insbesondere kann die mindestens eine Temperiermittelleitung an einer Innenfläche mindestens einer Seitenwand und/oder eines Bodens des Batteriesystemgehäuses beziehungsweise der Vergussform angeordnet, beispielsweise befestigt, werden. Zum Beispiel können mindestens zwei Temperiermittelleitungen an Innenflächen von, insbesondere einander gegenüberliegenden, Seitenwänden des Batteriesystemgehäuses beziehungsweise der Vergussform angeordnet, beispielsweise befestigt, werden. Alternativ oder zusätzlich dazu, kann eine Temperiermittelleitung an der Innenfläche des Bodens des Batteriesystemgehäuses beziehungsweise der Vergussform angeordnet, beispielsweise befestigt, werden.

Zum Beispiel kann die mindestens eine Temperiermittelleitung teilweise in das Material des Batteriesystemgehäuses beziehungsweise der Vergussform eingebettet, beispielsweise darin eingeklemmt oder daran angegossen, werden. Beispielsweise kann die mindestens eine Temperiermittelleitung teilweise in das Material mindestens einer Seitenwand und/oder des Bodens des Batteriesystemgehäuses beziehungsweise der Vergussform eingebettet, beispielsweise darin eingeklemmt oder daran angegossen, werden.

Die mindestens eine Temperiermittelleitung kann insbesondere über Temperiermittelleitungsanschlüsse anschließbar sein, welche insbesondere außerhalb des Batteriesystemgehäuses beziehungsweise der Vergussform angeordnet werden.

Beispielsweise kann die mindestens eine Temperiermittelleitung durch eine Seitenwand des Batteriesystemgehäuses oder der Vergussform hindurchgeführt werden. Zum Beispiel können mindestens zwei Temperiermittelleitungen durch, beispielsweise einander gegenüberliegende, Seitenwände des Batteriesystemgehäuses beziehungsweise der Vergussform hindurchgeführt werden.

Im Rahmen einer weiteren, alternativen oder zusätzlichen Ausführungsform wird das Batteriesystemgehäuse oder die Vergussform mit mindestens einer Temperierplatte ausgestattet. Beispielsweise kann die mindestens eine Temperierplatte seitlich und/oder unterhalb der Batteriezellen angeordnet, beispielsweise befestigt, werden. So kann vorteilhafterweise eine Seitenkühlung und/oder Bodenkühlung auf einfache Weise realisiert werden. Beim Vergießen mit Vergussmasse kann (dann) insbesondere auch die mindestens eine Temperierplatte zumindest teilweise mit mindestens einer Vergussmasse vergossen werden. So kann vorteilhafterweise ebenfalls auf einfache Weise eine Temperierung durch ein Temperiermittel in das Batteriesystem integriert werden.

Im Rahmen einer Ausgestaltung dieser Ausführungsform bildet mindestens eine Temperierplatte mindestens eine Seitenwand und/oder den Boden des Batteriesystemgehäuses beziehungsweise der Vergussform. Dabei kann das Batteriesystemgehäuse beziehungsweise die Vergussform insbesondere mindestens zweiteilig, beispielsweise mindestens dreiteilig, zum Beispiel mehrteilig, sein. So kann vorteilhafterweise eine besonders hohe Wärmeableitung erzielt werden.

Im Rahmen einer speziellen Ausgestaltung dieser Ausführungsform wird das Batteriesystemgehäuse beziehungsweise die Vergussform, beispielsweise vor dem Einbringen der Batteriezellen und insbesondere vor dem Vergießen mit Vergussmasse, aus einem Grundkörper, beispielsweise in Form eines Rahmens oder einer Platte, und mindestens einer, den Innenraum des Batteriesystemgehäuses beziehungsweise der Vergussform begrenzenden, beispielsweise als Seitenwand und/oder Boden des Batteriesystemgehäuses beziehungsweise Vergussform dienenden, Temperierplatte zusammengesetzt. Beim Vergießen mit Vergussmasse kann (dann) insbesondere auch die mindestens eine Temperierplatte zumindest teilweise mit mindestens einer Vergussmasse vergossen werden.

Die mindestens eine Vergussmasse kann insbesondere elektrisch isolierend und gegebenenfalls wärmeleitend sein.

Die mindestens eine Vergussmasse kann insbesondere bei einer Temperatur von ≤ 60 °C, beispielsweise in einem Temperaturbereich zwischen Raumtemperatur und ≤ 60 °C, aushärtbar sein.

Insofern die mindestens eine Vergussmasse bei Raumtemperatur aushärtbar ist, kann das Aushärten der mindestens einen Vergussmasse vorteilhafterweise von allein beziehungsweise ohne Erhitzen erfolgen. Insofern die mindestens eine Vergussmasse bei einer Temperatur oberhalb der Raumtemperatur aushärtbar ist, kann die mindestens eine Vergussmasse, insbesondere nach dem Vergießen, beispielsweise auf eine Temperatur ≤ 60 °C, erhitzt werden.

Die mindestens eine Vergussmasse kann zum Beispiel ein erfindungsgemäßes Reaktionsharzsystem umfassen beziehungsweise eine erfindungsgemäße Vergussmasse sein.

Im Rahmen einer weiteren, alternativen oder zusätzlichen Ausführungsform (zweifacher Verguss, Zweiphasen-Verguss) wird (zunächst) der mindestens eine temperiermittelbeabstandende Zwischenraum mit einer ersten Vergussmasse und (dann) der mindestens eine batteriezellenbeabstandende Zwischenraum und/oder der mindestens eine gehäuse- oder vergussformbeabstandenden Zwischenraum mit einer zweiten Vergussmasse gefüllt wird. Durch den Einsatz von mehreren Vergussmassen können diese vorteilhafterweise auf deren jeweilige Funktion hin optimiert werden.

Insbesondere kann dabei die erste Vergussmasse wärmeleitend und elektrisch isolierend sein. Die zweite Vergussmasse kann insbesondere elektrisch isolierend sein.

Im Rahmen einer Ausgestaltung dieser Ausführungsform weist die erste Vergussmasse eine höhere Wärmeleitfähigkeit als die zweite Vergussmasse auf. So kann vorteilhafterweise durch die erste Vergussmasse der Wärmefluss von den Batteriezellen zum Temperiermittel hin optimiert werden.

Im Rahmen einer weiteren, alternativen oder zusätzlichen Ausgestaltung dieser Ausführungsform weist die zweite Vergussmasse einen höheren elektrischen Widerstand als die erste Vergussmasse auf. So kann vorteilhafterweise durch die zweite Vergussmasse die elektrische Isolierung der Batteriezellen untereinander beziehungsweise nach Außen optimiert werden.

Im Rahmen einer weiteren, alternativen oder zusätzlichen Ausgestaltung dieser Ausführungsform weist die zweite Vergussmasse eine geringere, insbesondere plastische, Fließgrenze und/oder Viskosität als die erste Vergussmasse auf. So kann vorteilhafterweise durch die zweite Vergussmasse die Stoßdämpfung zwischen den Batteriezellen beziehungsweise nach Außen optimiert werden.

Im Rahmen einer weiteren, speziellen Ausgestaltung dieser Ausführungsform erfolgt das Vergießen mit der ersten und zweiten Vergussmasse nass-in-nass. So kann vorteilhafterweise der thermische Übergang zwischen der, insbesondere hochwärmeleitfähigen, ersten Vergussmasse und der, insbesondere weniger wärmeleitfähigen, zweiten Vergussmasse verbessert werden.

Beispielsweise kann die erste Vergussmasse ein erfindungsgemäßes Reaktionsharzsystem umfassen beziehungsweise eine erfindungsgemäße Vergussmasse sein, welches beziehungsweise welche gefüllt, insbesondere hochgefüllt, mit mindestens einem wärmeleitenden Füllstoff ist. So kann die erste Vergussmasse vorteilhafterweise eine hohe Wärmeleitfähigkeit zur thermischen Anbindung der Batteriezellen einbringen. Die zweite Vergussmasse kann dabei insbesondere eine elektrisch isolierende Vergussmasse, beispielsweise eine modifizierte, gefüllte Epoxid-Vergussmasse, zum Beispiel eine erfindungsgemäße Vergussmasse, insbesondere mit guter elektrischer Isolierfähigkeit, sein.

Im Rahmen einer weiteren, alternativen Ausführungsform (einfacher Verguss) wird (zunächst), insbesondere vor dem Einbringen der Batteriezellen und/oder dem Füllen mit Vergussmasse, in dem mindestens einen temperiermittelbeabstandende (Zwischen-)Raum ein Halbzeug angeordnet und (dann) der mindestens eine batteriezellenbeabstandende Zwischenraum und/oder der mindestens eine gehäuse- oder vergussformbeabstandende Zwischenraum mit einer Vergussmasse gefüllt. Dabei kann das Halbzeug beispielsweise eine Matte oder ein Kissen, insbesondere eine Elastomermatte oder ein Elastomerkissen, beispielsweise ein so genanntes GapPad, zum Beispiel aus einem TIM-Material (Englisch: Thermal Interface Material), insbesondere zur thermischen Kontaktierung der Batteriezellen, sein. Beispielsweise kann das Halbzeug eine höhere Wärmeleitfähigkeit als die Vergussmasse und/oder die Vergussmasse einen höheren elektrischen Widerstand als das Halbzeug und/oder das Halbzeug einen geringeren Reibungskoeffizienten als die Vergussmasse und/oder die Vergussmasse eine geringere Fließgrenze und/oder Viskosität als das Halbzeug aufweisen.

Im Rahmen einer weiteren, alternativen oder zusätzlichen Ausführungsform (einfacher Verguss) werden der mindestens eine temperiermittelbeabstandende Zwischenraum, der mindestens eine batteriezellenbeabstandende Zwischenraum und der mindestens eine gehäuse- oder vergussformbeabstandende Zwischenraum mit einer Vergussmasse gefüllt.

Die mindestens eine Vergussmasse kann, insbesondere im Fall eines einfachen Vergusses, beispielsweise eine modifizierte, gefüllte Epoxid-Vergussmasse, insbesondere mit guter elektrischer Isolierfähigkeit, sein.

Gegebenenfalls können am Boden und/oder an den Seitenwänden des Batteriesystemgehäuses zusätzlich wärmeleitende Schichten und/oder Folien aus einem TIM-Material (Englisch: Thermal Interface Material), eingebracht, beispielsweise angebracht, werden.

Hinsichtlich weiterer technischer Merkmale und Vorteile des erfindungsgemäßen Verfahrens wird hiermit explizit auf die Erläuterungen im Zusammenhang mit dem erfindungsgemäßen Batteriesystem und dem Reaktionsharzsystem beziehungsweise der Vergussmasse sowie auf die Figuren und die Figurenbeschreibung verwiesen.

Ein weiterer Gegenstand der vorliegenden Erfindung ist ein Batteriesystem, welches Batteriezellen umfasst und/oder durch ein erfindungsgemäßes Verfahren hergestellt ist.

Die Batteriezellen sind zumindest teilweise mit mindestens einer Vergussmasse vergossen.

Das Batteriesystem kann beispielsweise ein Batteriesystemgehäuse mit einem Innenraum zur Aufnahme von Batteriezellen aufweisen. Das Batteriesystemgehäuse kann beispielsweise aus Kunststoff ausgebildet, zum Beispiel ein Kunststoffgehäuse, oder aus Metall ausgebildet, zum Beispiel ein Metallgehäuse, sein.

Beispielsweise kann das Batteriesystem ein Lithium-Batteriesystem, beispielsweise ein Lithium-Batteriemodul und/oder Lithium-Batteriepack, zum Beispiel ein Lithium-Ionen-Batteriemodul und/oder Lithium-Ionen-Batteriepack, sein. Dabei können die Batteriezellen insbesondere Lithium-Zellen, zum Beispiel Lithium-Ionen-Zellen, sein. Zum Beispiel können die Batteriezellen jeweils ein, insbesondere festes beziehungsweise starres, beispielsweise metallisches, Zellgehäuse aufweisen. Beispielsweise können die Batteriezellen, insbesondere prismatische, Gehäusezellen, so genannte Hard-Case-Zellen (Englisch: Hard Case Cells), zum Beispiel prismatische Zellen, sein.

Im Rahmen einer Ausführungsform sind die Batteriezellen durch mindestens ein Montagegitter zur Positionierung von Batteriezellen und/oder durch Positionsrippen und/oder Positionsvorsprünge im Innenraum eines Batteriesystemgehäuses, welche zur Positionierung von Batteriezellen ausgelegt sind, positioniert. Dabei können die Batteriezellen und das mindestens eine Montagegitter und/oder die Positionsrippen und/oder Positionsvorsprünge des Batteriesystemgehäuses insbesondere zumindest teilweise mit mindestens einer Vergussmasse vergossen sein.

Durch das mindestens eine Montagegitter und/oder durch die Positionsrippen und/oder Positionsvorsprünge des Batteriesystemgehäuses können die Batteriezellen vorteilhafterweise ausgerichtet und positioniert beziehungsweise auf Position gehalten werden. Insbesondere können die Batteriezellen durch das mindestens eine Montagegitter und/oder durch die Positionsrippen und/oder Positionsvorsprünge des Batteriesystemgehäuses beabstandet werden. Beispielsweise können die Batteriezellen durch das mindestens eine Montagegitter und/oder durch die Positionsrippen und/oder Positionsvorsprünge des Batteriesystemgehäuses beabstandet zueinander und/oder beabstandet zu einem Batteriesystemgehäuse, beispielsweise beabstandet zu einer Wand des Batteriesystemgehäuses, und/oder beabstandet zur Außenseite einer die Batteriezellen umfassenden Vergussmasseneinheit und/oder beabstandet zu einem Temperiermittel angeordnet sein. So können vorteilhafterweise gleichmäßige Vergussmassenabschnitte zwischen den Batteriezellen und/oder zwischen den Batteriezellen und einem Batteriesystemgehäuse, beispielsweise zwischen den Batteriezellen und einer Wand des Batteriesystemgehäuses, und/oder zwischen den Batteriezellen und der Außenseite einer die Batteriezellen umfassenden Vergussmasseneinheit und/oder zwischen den Batteriezellen und einem Temperiermittel realisiert werden.

Zum Beispiel kann das Batteriesystem mindestens zwei Batteriezellen, beispielsweise mindestens fünf Batteriezellen, zum Beispiel mindestens sechs Batteriezellen, umfassen.

Zum Beispiel kann das mindestens eine Montagegitter, zum Beispiel das obere Montagegitter und/oder das untere Montagegitter, und/oder können die Positionsrippen und/oder Positionsvorsprünge und/oder kann der bei der Herstellung verwendete Montagegreifer zur Positionierung von mindestens zwei Batteriezellen, beispielsweise mindestens fünf Batteriezellen, zum Beispiel mindestens sechs Batteriezellen, ausgelegt sein.

Im Rahmen einer weiteren, alternativen oder zusätzlichen Ausführungsform umfasst das Batteriesystem weiterhin mindestens eine Temperiermittelleitung. Die mindestens eine Temperiermittelleitung kann beispielsweise in Form einer Leitungsschlange oder eines Leitungsrohrs, zum Beispiel einer so genannten Kühlschlange, ausgebildet sein. Dabei können die Batteriezellen und die mindestens eine Temperiermittelleitung insbesondere zumindest teilweise mit mindestens einer Vergussmasse vergossen sein. Beispielsweise kann die mindestens eine Temperiermittelleitung in Vergussmasse eingegossen sein.

Im Rahmen einer Ausgestaltung dieser Ausführungsform ist seitlich und/oder unterhalb der Batteriezellen mindestens eine Temperiermittelleitung angeordnet.

Dabei kann die mindestens eine Temperiermittelleitung seitlich und/oder unterhalb der Batteriezellen zumindest teilweise mit mindestens einer Vergussmasse vergossen beziehungsweise in Vergussmasse eingegossen sein.

Zum Beispiel kann die mindestens eine Temperiermittelleitung in dem Innenraum des Batteriesystemgehäuses und/oder in der mindestens einen Vergussmasse, beispielsweise in einer, die Batteriezellen umfassenden Vergussmasseneinheit, angeordnet sein. Beispielsweise kann die mindestens eine Temperiermittelleitung zwischen Batteriezellen, insbesondere zwischen Seitenflächen der Batteriezellen, und einer Seitenwand des Batteriesystemgehäuses beziehungsweise einer seitlichen Außenfläche der Vergussmasseneinheit und/oder zwischen Batteriezellen, insbesondere zwischen Bodenflächen der Batteriezellen, und dem Boden des Batteriesystemgehäuses beziehungsweise einer unteren Außenfläche der Vergussmasseneinheit angeordnet sein.

Insbesondere kann die mindestens eine Temperiermittelleitung an einer Innenfläche mindestens einer Seitenwand und/oder eines Bodens des Batteriesystemgehäuses angeordnet, beispielsweise befestigt, beziehungsweise an mindestens einer seitlichen Außenfläche und/oder unteren Außenfläche der Vergussmasseneinheit angeordnet sein. Zum Beispiel können mindestens zwei Temperiermittelleitungen an Innenflächen von, insbesondere einander gegenüberliegenden, Seitenwänden des Batteriesystemgehäuses angeordnet, beispielsweise befestigt, beziehungsweise an, insbesondere einander gegenüberliegenden, seitlichen Außenflächen der Vergussmasseneinheit angeordnet sein. Alternativ oder zusätzlich dazu, kann eine Temperiermittelleitung an der Innenfläche des Bodens des Batteriesystemgehäuses angeordnet, beispielsweise befestigt, beziehungsweise an der unteren Außenfläche der Vergussmasseneinheit angeordnet sein.

Zum Beispiel kann die mindestens eine Temperiermittelleitung teilweise in das Material des Batteriesystemgehäuses eingebettet, beispielsweise darin eingeklemmt oder daran angegossen, sein. Beispielsweise kann die mindestens eine Temperiermittelleitung teilweise in das Material mindestens einer Seitenwand und/oder des Bodens des Batteriesystemgehäuses eingebettet, beispielsweise darin eingeklemmt oder daran angegossen, sein.

Die mindestens eine Temperiermittelleitung kann insbesondere über Temperiermittelleitungsanschlüsse anschließbar sein, beispielsweise welche außerhalb des Batteriesystemgehäuses und/oder der mindestens einen Vergussmasse, beispielweise außerhalb der Vergussmasseneinheit, angeordnet sind.

Zum Beispiel kann die mindestens eine Temperiermittelleitung durch eine Seitenwand des Batteriesystemgehäuses oder der Vergussmasseneinheit hindurchgeführt sein. Zum Beispiel können mindestens zwei Temperiermittelleitungen durch, beispielsweise einander gegenüberliegende, Seitenwände des Batteriesystemgehäuses beziehungsweise der Vergussmasseneinheit hindurchgeführt werden.

Im Rahmen einer weiteren, alternativen oder zusätzlichen Ausführungsform umfasst das Batteriesystem mindestens einer Temperierplatte. Dabei können die Batteriezellen und die mindestens eine Temperierplatte insbesondere zumindest teilweise mit mindestens einer Vergussmasse vergossen sein.

Beispielsweise kann das Batteriesystemgehäuse oder eine beziehungsweise die, die Batteriezellen umfassende Vergussmasseneinheit mit mindestens einer Temperierplatte ausgestattet sein. Beispielsweise kann die mindestens eine Temperierplatte seitlich und/oder unterhalb der Batteriezellen angeordnet, gegebenenfalls befestigt, sein.

Im Rahmen einer Ausgestaltung dieser Ausführungsform bildet mindestens eine Temperierplatte mindestens eine Seitenwand und/oder den Boden eines beziehungsweise des Batteriesystemgehäuses und/oder einer beziehungsweise der, die Batteriezellen umfassenden Vergussmasseneinheit. Dabei können die Batteriezellen und die mindestens eine Temperierplatte insbesondere zumindest teilweise mit mindestens einer Vergussmasse vergossen sein.

Das Batteriesystemgehäuse kann dabei insbesondere mindestens zweiteilig, beispielsweise mindestens dreiteilig, zum Beispiel mehrteilig, sein.

Insbesondere kann dabei das Batteriesystemgehäuse aus einem Grundkörper, beispielsweise in Form eines Rahmens oder einer Platte, und mindestens einer, den Innenraum des Batteriesystemgehäuses begrenzenden, beispielsweise als Boden und/oder Seitenwand des Batteriesystemgehäuses dienenden, Temperierplatte zusammengesetzt beziehungsweise zusammensetzbar sein.

Beispielsweise können in dem Batteriesystem die Batteriezellen und das mindestens eine Montagegitter und/oder die Positionsrippen und/oder Positionsvorsprünge des Batteriesystemgehäuses und/oder die mindestens eine Temperiermittelleitung und/oder die mindestens eine Temperierplatte zumindest teilweise mit mindestens einer Vergussmasse vergossen sein.

Zum Beispiel können die Batteriezellen in dem Innenraum des Batteriesystemgehäuses und/oder in der mindestens einen Vergussmasse, beispielsweise einer beziehungsweise der, die Batteriezellen umfassenden Vergussmasseneinheit, angeordnet sein. Beispielsweise kann der Innenraum des Batteriesystemgehäuses zumindest teilweise, beispielsweise- insbesondere im Wesentlichen - vollständig, mit mindestens einer Vergussmasse gefüllt, insbesondere aufgefüllt, sein.

Im Rahmen einer weiteren, alternativen oder zusätzlichen Ausführungsform ist das mindestens eine Montagegitter und/oder sind die Positionsrippen und/oder Positionsvorsprünge des Batteriesystemgehäuses und/oder ist das Batteriesystemgehäuse und/oder ist die mindestens eine Temperiermittelleitung und/oder ist die mindestens eine Temperierplatte aus Kunststoff ausgebildet. So können vorteilhafterweise, insbesondere metallische, Bauteile eingespart und Gewicht verringert sowie gegebenenfalls Entsorgungskosten verringert und beispielsweise das Recycling des Systems vereinfacht und die Kosten dafür gesenkt werden. Zum Beispiel kann das mindestens eine Montagegitter Polybutylenterephthalat (PBT) umfassen oder daraus ausgebildet sein.

Im Rahmen einer weiteren, alternativen oder zusätzlichen Ausführungsform sind die Batteriezellen, beispielsweise durch das mindestens eine Montagegitter und/oder durch die Positionsrippen und/oder Positionsvorsprünge des Batteriesystemgehäuses, unter Ausbildung mindestens eines batteriezellenbeabstandenden Zwischenraums beabstandet zueinander und/oder unter Ausbildung mindestens eines gehäuse- oder vergussmasseneinheitaußenseitebeabstandenden Zwischenraums beabstandet zu einem beziehungsweise dem Batteriesystemgehäuse, beispielsweise beabstandet zu einer Wand des Batteriesystemgehäuses, und/oder beabstandet zu einer Außenseite einer beziehungsweise der, die Batteriezellen umfassenden Vergussmasseneinheit und/oder unter Ausbildung mindestens eines temperiermittelbeabstandenden Zwischenraums beabstandet zu einem Temperiermittel, insbesondere einer beziehungsweise der mindestens einen Temperiermittelleitung und/oder Temperiermittelplatte, positioniert. Dabei kann insbesondere der mindestens eine batteriezellenbeabstandende Zwischenraum und/oder der mindestens eine gehäuse- oder vergussmasseneinheitaußenseitebeabstandende Zwischenraum und/oder der mindestens eine temperiermittelbeabstandende Zwischenraum mit mindestens einer Vergussmasse gefüllt sein.

Im Rahmen einer weiteren, alternativen oder zusätzlichen Ausführungsform weist das mindestens eine Montagegitter Gitteröffnungen auf, in welche jeweils eine Batteriezelle aufgenommen, insbesondere eingesteckt, ist. Dabei können die Batteriezellen jeweils umfänglich von gitteröffnungsbildenden Gitterstegen des mindestens einen Montagegitters umgeben sein. Dabei kann mindestens einer, der gitteröffnungsbildenden Gitterstege mindestens eine Vergussmasseneinlassöffnung aufweisen.

Im Rahmen einer weiteren, alternativen oder zusätzlichen Ausführungsform weist das Batteriesystem ein oberes Montagegitter zur Positionierung von Batteriezellen und/oder ein unteres Montagegitter zur Positionierung von Batteriezellen auf. Insbesondere kann das Batteriesystem ein oberes Montagegitter zur Positionierung von Batteriezellen und ein unteres Montagegitter zur Positionierung von Batteriezellen aufweisen. Dabei können beispielsweise die Gitteröffnungen des oberen Montagegitters derart ausgestaltet sein, dass darin die Pole der Batteriezellen und insbesondere auch die Sicherheitsventile der Batteriezellen offen liegen. Gegebenenfalls können dabei in den Gitteröffnungen des oberen Montagegitters auch im Wesentlichen die Deckflächen der Batteriezellen offen liegen.

Das mindestens eine Montagegitter kann insbesondere einteilig sein. Beispielsweise kann das obere Monategitter einteilig und/oder das untere Montagegitter einteilig und/oder das obere und untere Montagegitter einteilig sein.

Beispielsweise kann das mindestens eine Montagegitter, beispielsweise das obere Montagegitter und/oder das untere Montagegitter, insbesondere vertikale und/oder laterale, Anschlagsabschnitte aufweisen, welche als Anschlag für die Batteriezellen und insbesondere auch zur Beabstandung von benachbarten Batteriezellen und/oder zur Beabstandung der Batteriezellen von einem beziehungsweise dem Batteriesystemgehäuse, insbesondere vom Boden und/oder mindestens einer Seitenwand des Batteriesystemgehäuses, oder von einer, insbesondere unteren und/oder seitlichen, Außenseite einer beziehungsweise der, die Batteriezellen umfassenden Vergussmasseneinheit und/oder zur Beabstandung der Batteriezellen von einem Temperiermittel, insbesondere einer beziehungsweise der mindestens einen Temperiermittelleitung und/oder Temperierplatte, dienen.

Zum Beispiel können vertikale Anschlagsabschnitte des oberen Montagegitters als oberer Anschlag für die Batteriezellen, insbesondere für die Deckflächen der Batteriezellen, und/oder laterale Anschlagsabschnitte des oberen Montagegitters als seitlicher Anschlag für die Batteriezellen, insbesondere für Seitenflächen der Batteriezellen, und/oder vertikale Anschlagsabschnitte des unteren Montagegitters als unterer Anschlag für die Batteriezellen, insbesondere für die Bodenflächen der Batteriezellen, und/oder laterale Anschlagsabschnitte des unteren Montagegitters als seitlicher Anschlag für die Batteriezellen, insbesondere für Seitenflächen der Batteriezellen, dienen. Beispielsweise können die, insbesondere vertikalen und/oder lateralen, Anschlagsabschnitte des oberen und/oder unteren Montagegitters derart ausgestaltet sein, dass diese höchstens Randabschnitte, beispielsweise der Deckflächen und/oder der Seitenflächen und/oder der Bodenflächen, der Batteriezellen bedecken. Zum Beispiel können die, insbesondere vertikalen und/oder lateralen, Anschlagsabschnitte des oberen und/oder unteren Montagegitters in Form von Laschen, beispielsweise welche sich ausgehend von einem gitteröffnungsbildenden Gittersteg lateral, zum Beispiel über eine Gitteröffnung, beziehungsweise vertikal erstrecken, und/oder in Form von Eckplateaus, beispielsweise welche sich über einen Eckabschnitt zwischen einer, von zwei gitteröffnungsbildenden Gitterstegen ausgebildeten Ecke erstrecken und/oder in Form von Rahmen, insbesondere welche sich ausgehend von gitteröffnungsbildenden Gitterstegen, insbesondere umlaufend, lateral, beispielsweise über die Gitteröffnung, und/oder vertikal, insbesondere umlaufend um die Batteriezellen, erstrecken und/oder in Form von Querstreben, beispielsweise welche sich zwischen zwei gitteröffnungsbildenden Gitterstegen erstrecken und/oder Gitteröffnungen, beispielsweise des unteren Montagegitters unten, begrenzen, ausgebildet sein.

Die, beispielsweise lateralen und/oder vertikalen, insbesondere lateralen, Anschlagsabschnitte des oberen und/oder unteren Montagegitters können zudem zur Beabstandung von benachbarten Batteriezellen und/oder zur Beabstandung der Batteriezellen von einem beziehungsweise dem Batteriesystemgehäuse, insbesondere vom Boden und/oder mindestens einer Seitenwand des Batteriesystemgehäuses, oder von einer, insbesondere unteren oder seitlichen, Außenseite einer beziehungsweise der, die Batteriezellen umfassenden Vergussmasseneinheit und/oder zur Beabstandung der Batteriezellen von einem Temperiermittel, insbesondere einer beziehungsweise der mindestens einen Temperiermittelleitung und/oder Temperierplatte, dienen.

Zusätzlich kann das obere und/oder untere Montagegitter gegebenenfalls Distanzabschnitte zur Beabstandung von benachbarten Batteriezellen, beispielsweise in Form von Stegen, zum Beispiel welche sich ausgehend von einem gitteröffnungsbildenden Gittersteg, insbesondere ausgehend von einer Ecke oder einem T-Stück zwischen mehreren gitteröffnungsbildenden Gitterstegen, vertikal erstrecken. So kann vorteilhafterweise eine Berührung zwischen den Batteriezellen, beispielsweise unter Vakuumverguss-Bedingungen, vermieden werden.

Alternativ oder zusätzlich kann das obere und/oder untere Montagegitter gegebenenfalls Distanzabschnitte zur Beabstandung der Batteriezellen von einem beziehungsweise dem Batteriesystemgehäuse, insbesondere vom Boden und/oder mindestens einer Seitenwand, oder von einer, insbesondere unteren oder seitlichen, Außenseite einer beziehungsweise der, die Batteriezellen umfassenden Vergussmasseneinheit, zum Beispiel in Form von Vorsprüngen, und/oder zur Beabstandung der Batteriezellen von einem Temperiermittel, insbesondere einer beziehungsweise der mindestens einen Temperiermittelleitung und/oder Temperierplatte, zum Beispiel in Form von Vorsprüngen, aufweisen.

Die Positionsrippen und/oder Positionsvorsprünge können beispielsweise (ebenfalls) als, insbesondere laterale und/oder vertikale, Anschläge für die Batteriezellen und insbesondere auch zur Beabstandung von benachbarten Batteriezellen und/oder zur Beabstandung der Batteriezellen von dem Batteriesystemgehäuse, insbesondere vom Boden und/oder mindestens einer Seitenwand des Batteriesystemgehäuses, und/oder zur Beabstandung der Batteriezellen von einem Temperiermittel, insbesondere einer beziehungsweise der mindestens einen Temperiermittelleitung und/oder Temperierplatte, dienen. Dabei können sich die Positionsrippen und/oder Positionsvorsprünge zur Beabstandung von benachbarten Batteriezellen und/oder die Positionsrippen und/oder Positionsvorsprünge zur Beabstandung der Batteriezellen von dem Batteriesystemgehäuse, und/oder die Positionsrippen und/oder Positionsvorsprünge zur Beabstandung der Batteriezellen von einem Temperiermittel, insbesondere einer beziehungsweise der mindestens einen Temperiermittelleitung und/oder Temperierplatte, beispielsweise von mindestens einer Seitenwand des Batteriesystemgehäuses, insbesondere ausgehend von einer Bestückungsöffnung des Batteriesystemgehäuses, längs einer Bestückungsrichtung, beispielsweise vertikal, erstrecken. Alternativ oder zusätzlich dazu können sich die Positionsrippen und/oder Positionsvorsprünge zur Beabstandung von benachbarten Batteriezellen und/oder die Positionsrippen und/oder Positionsvorsprünge zur Beabstandung der Batteriezellen von dem Batteriesystemgehäuse, und/oder die Positionsrippen und/oder Positionsvorsprünge zur Beabstandung der Batteriezellen von einem Temperiermittel, insbesondere einer beziehungsweise der mindestens einen Temperiermittelleitung und/oder Temperierplatte, beispielsweise von mindestens einer Seitenwand des Batteriesystemgehäuses, beispielsweise, insbesondere ausgehend von einer Fläche des Batteriesystemgehäuses, zumindest in den Innenraum des Batteriesystemgehäuses hinein erstrecken. Insbesondere können sich die Positionsrippen und/oder Positionsvorsprünge zur Beabstandung von benachbarten Batteriezellen von mindestens einer Seitenwand des Batteriesystemgehäuses, insbesondere ausgehend von einer Bestückungsöffnung des Batteriesystemgehäuses, längs einer Bestückungsrichtung, beispielsweise vertikal, erstrecken. Die Positionsrippen und/oder Positionsvorsprünge zur Beabstandung der Batteriezellen von einem Temperiermittel, insbesondere einer beziehungsweise der mindestens einen Temperiermittelleitung und/oder Temperierplatte, können sich insbesondere, insbesondere ausgehend von einer mit dem Temperiermittel zu bestückenden Fläche, zumindest in den Innenraum des Batteriesystemgehäuses hinein erstrecken.

Die mindestens eine Vergussmasse kann insbesondere elektrisch isolierend und gegebenenfalls wärmeleitend sein. Die mindestens eine Vergussmasse kann insbesondere bei einer Temperatur von ≤ 60 °C, beispielsweise in einem Temperaturbereich zwischen Raumtemperatur und ≤ 60 °C, aushärtbar sein.

Die mindestens eine Vergussmasse kann zum Beispiel ein Reaktionsharzsystem umfassen.

Im Rahmen einer weiteren, alternativen oder zusätzlichen Ausführungsform (zweifacher Verguss, Zweiphasen-Verguss) ist der mindestens eine temperiermittelbeabstandende Zwischenraum mit einer ersten Vergussmasse und der mindestens eine batteriezellenbeabstandende Zwischenraum und/oder der mindestens eine gehäuse- oder vergussmasseneinheitaußenseitebeabstandende Zwischenraum mit einer zweiten Vergussmasse gefüllt. Insbesondere kann dabei die erste Vergussmasse wärmeleitend und elektrisch isolierend sein. Die zweite Vergussmasse kann insbesondere elektrisch isolierend sein.

Insbesondere kann die erste Vergussmasse eine höhere Wärmeleitfähigkeit als die zweite Vergussmasse und/oder die zweite Vergussmasse einen höheren elektrischen Widerstand als die erste Vergussmasse und/oder die zweite Vergussmasse eine geringere, insbesondere plastische, Fließgrenze und/oder Viskosität als die erste Vergussmasse aufweisen.

Im Rahmen einer Ausgestaltung dieser Ausführungsform sind die erste und die zweite Vergussmasse nass-in-nass vergossen.

Beispielsweise kann die erste Vergussmasse ein erfindungsgemäßes Reaktionsharzsystem umfassen beziehungsweise eine erfindungsgemäße Vergussmasse sein, welches beziehungsweise welche gefüllt, insbesondere hochgefüllt, mit mindestens einem wärmeleitenden Füllstoff ist. Die zweite Vergussmasse kann dabei insbesondere eine elektrisch isolierende Vergussmasse, beispielsweise eine modifizierte, gefüllte Epoxid-Vergussmasse, zum Beispiel eine erfindungsgemäße Vergussmasse, insbesondere mit guter elektrischer Isolierfähigkeit, sein.

Im Rahmen einer weiteren, alternativen Ausführungsform (einfacher Verguss) ist in dem mindestens einen temperiermittelbeabstandende Zwischenraum ein Halbzeug angeordnet und der mindestens eine batteriezellenbeabstandende Zwischenraums und/oder der mindestens eine gehäuse- oder vergussmasseneinheitaußenseitebeabstandende Zwischenraum mit einer Vergussmasse gefüllt. Dabei kann das Halbzeug beispielsweise eine Matte oder ein Kissen, insbesondere eine Elastomermatte oder ein Elastomerkissen, beispielsweise ein so genanntes GapPad, zum Beispiel aus einem TIM-Material (Englisch: Thermal Interface Material), insbesondere zur thermischen Kontaktierung der Batteriezellen, sein. Beispielsweise kann das Halbzeug eine höhere Wärmeleitfähigkeit als die Vergussmasse und/oder die Vergussmasse einen höheren elektrischen Widerstand als das Halbzeug und/oder das Halbzeug einen geringeren Reibungskoeffizienten als die Vergussmasse und/oder die Vergussmasse eine geringere Fließgrenze und/oder Viskosität als das Halbzeug aufweisen.

Im Rahmen einer weiteren, alternativen Ausführungsform (einfacher Verguss) sind der mindestens eine temperiermittelbeabstandende Zwischenraum, der mindestens eine batteriezellenbeabstandende Zwischenraum und der mindestens eine gehäuse- oder vergussmasseneinheitaußenseitebeabstandende Zwischenraum mit einer Vergussmasse gefüllt.

Die mindestens eine Vergussmasse kann, insbesondere im Fall eines einfachen Vergusses, beispielsweise eine modifizierte, gefüllte Epoxid-Vergussmasse, insbesondere mit guter elektrischer Isolierfähigkeit, sein.

Gegebenenfalls können am Boden und/oder an den Seitenwänden des Batteriesystemgehäuses zusätzlich wärmeleitende Schichten und/oder Folien aus einem TIM-Material (Englisch: Thermal Interface Material), eingebracht, beispielsweise angebracht, werden.

Das Batteriesystem kann beispielsweise in einem Elektrofahrzeug oder Hybridelektrofahrzeug eingesetzt werden beziehungsweise hierfür ausgelegt sein.

Hinsichtlich weiterer technischer Merkmale und Vorteile des erfindungsgemäßen Batteriesystems wird hiermit explizit auf die Erläuterungen im Zusammenhang mit dem erfindungsgemäßen Verfahren und dem Reaktionsharzsystem beziehungsweise der Vergussmasse sowie auf die Figuren und die Figurenbeschreibung verwiesen.

Ferner ist für ein Ausführungsbeispiel der Erfindung ein Reaktionsharzsystem beziehungsweise eine Vergussmasse vorgesehen, welches mindestens ein Epoxidharz auf Basis von Bisphenol A und/oder Bisphenol F sowie eine Bisphenol-A- und/oder -F-Epoxid, insbesondere Bisphenol-A-Epoxid, basierte Formulierung mit Silikonelastomerpartikeln und mindestens einen Aminhärter umfasst. In der Formulierung, können insbesondere Epoxid-Einheiten chemisch, beispielsweise kovalent, mit Silikon-Einheiten, insbesondere welche die Silikonelastomerpartikel bilden, verbunden sein. Zum Beispiel können mit den Silikonelastomerpartikeln Epoxid-Einheiten chemisch verbunden, beispielsweise darauf aufgepfropft, sein beziehungsweise können sich Polymersequenzen mit unpolaren Silikon-Einheiten zu einem Silikonelastomerpartikel zusammenknäulen, wobei Polymersequenzen mit polaren Epoxid-Einheiten nach Außen gestülpt werden. Daher kann die Formulierung insbesondere elastische Partikel beziehungsweise Silikonelastomerpartikel umfassen beziehungsweise daraus ausgebildet sein, deren Inneres durch Silikon-Einheiten und deren Äußeres durch Epoxid-Einheiten ausgebildet wird.

Durch den mindestens einen Aminhärter kann vorteilhafterweise eine Aushärtung des Reaktionsharzsystems bei einer Temperatur von ≤ 60 °C, zum Beispiel bei Raumtemperatur, erzielt werden. So kann vorteilhafterweise die thermische Belastung der Batteriezellen auf ≤ 60 °C beschränkt werden. Durch die Silikonelastomerpartikel, insbesondere die Silikoneinheiten im Inneren der Partikel, kann vorteilhafterweise der E-Modul reduziert werden. Dies hat wiederum den Vorteil, dass die Vergussmasse auch hohe Zug- und Druckkräfte beziehungsweise hohe Verformungskräfte der Batteriezellen, beispielsweise bei Lade-/Entlade-Vorgängen der Batteriezellen, insbesondere über die gesamte Lebensdauer, aufnehmen kann. Darüber hinaus kann durch die Silikonelastomerpartikel, insbesondere die Silikon-Einheiten im Inneren der Partikel, vorteilhafterweise die Bruchzähigkeit (Zähigkeitsmodifizierung) erhöht und eine, beispielsweise fortschreitende, Rissausbildung vermieden werden. Dadurch kann wiederum auch vorteilhafterweise die Abrasionsbeständigkeit verbessert werden. Durch die, insbesondere chemisch verbundenen, Epoxid-Einheiten, insbesondere welche das Äußere der Partikel bilden, können sich die Partikel zusätzlich chemisch wie ein Epoxid, beispielsweise in einer Epoxidharzmatrix, verhalten.

Im Rahmen einer Ausführungsform umfasst oder ist der mindestens eine Aminhärter mindestens ein Polyamin und/oder mindestens ein Polyamidoamin. Zum Beispiel kann der mindestens eine Aminhärter Tetraethylenpentamin und/oder Triethylentetramin umfassen oder sein. Diese Aminhärter haben sich als besonders vorteilhaft erwiesen.

Die Formulierung beziehungsweise die Silikonelastomerpartikel können beispielsweise in Form einer Dispersion aus Harz und Silikonelastomerpartikeln, beispielsweise vernetzten Polyorganosiloxan-Partikeln, eingesetzt sein beziehungsweise werden. Beispielsweise kann die Formulierung in Form einer Dispersion eingesetzt sein beziehungsweise werden, welche das mindestens eine Epoxidharz auf Basis von Bisphenol A und/oder Bisphenol F, insbesondere Bisphenol A, und, insbesondere feste oder flüssige, Silikonelastomerpartikel enthält. Dabei kann das Silikon in der Dispersion beispielsweise zu einem kautschukelastischen Polymer vernetzt enthalten sein.

Im Rahmen einer weiteren Ausführungsform umfasst das Reaktionsharzsystem beziehungsweise die Vergussmasse weiterhin mindestens einen, insbesondere wärmeleitenden, Füllstoff. So kann vorteilhafterweise die Wärmeableitung verbessert und/oder der Ausdehnungskoeffizient reduziert werden. Zum Beispiel kann der mindestens eine, insbesondere wärmeleitende, Füllstoff Aluminiumhydroxid und/oder Aluminiumoxid und/oder Siliciumdioxid, insbesondere Quarz, und/oder Bornitrid und/oder Kreide und/oder Mikrodolomit und/oder Talkum und/oder Alumosilikat und/oder Magnesiumoxid und/oder Wollastonit und/oder Magnesiumcarbonat und/oder Glimmer umfassen oder sein. Insbesondere kann der mindestens eine, insbesondere wärmeleitende, Füllstoff Aluminiumhydroxid und/oder Aluminiumoxid und/oder Siliciumdioxid, insbesondere Quarz, und/oder Bornitrid umfassen oder sein.

Beispielsweise kann der mindestens eine, insbesondere wärmeleitende, Füllstoff eine Korngrößenverteilung in einem Bereich von ≥ 2 µm bis ≤ 1 mm aufweisen.

Im Rahmen einer weiteren Ausführungsform umfasst das Reaktionsharzsystem beziehungsweise die Vergussmasse, bezogen auf das Gesamtgewicht des Reaktionsharzsystem beziehungsweise der Vergussmasse, ≥ 9 Gew.-% bis ≤ 77 Gew.-%, beispielsweise ≥ 9,3 Gew.-% bis ≤ 76,5 Gew.-%, an dem mindestens einen Epoxidharz auf Basis von Bisphenol A und/oder Bisphenol F. Zum Beispiel kann das Reaktionsharzsystem beziehungsweise die Vergussmasse, bezogen auf das Gesamtgewicht des Reaktionsharzsystem beziehungsweise der Vergussmasse, ≥ 9 Gew.-% bis ≤ 30 Gew.-% an dem mindestens einen Epoxidharz auf Basis von Bisphenol A und/oder Bisphenol F umfassen.

Im Rahmen einer weiteren Ausführungsform umfasst das Reaktionsharzsystem beziehungsweise die Vergussmasse, bezogen auf das Gesamtgewicht des Reaktionsharzsystem beziehungsweise der Vergussmasse, ≥ 4 Gew.-% bis ≤ 40 Gew.-%, beispielsweise ≥ 4,2 Gew.-% bis ≤ 36,5 Gew.-%, an dem mindestens einen Aminhärter. Zum Beispiel kann das Reaktionsharzsystem beziehungsweise die Vergussmasse, bezogen auf das Gesamtgewicht des Reaktionsharzsystem beziehungsweise der Vergussmasse, ≥ 4 Gew.-% bis ≤ 12 Gew.-% an dem mindestens einen Aminhärter umfassen.

Im Rahmen einer weiteren Ausführungsform umfasst das Reaktionsharzsystem beziehungsweise die Vergussmasse, bezogen auf das Gesamtgewicht des Reaktionsharzsystem beziehungsweise der Vergussmasse, ≥ 0,1 Gew.-% bis ≤ 35 Gew.-%, beispielsweise ≥ 0,2 Gew.-% bis ≤ 34,6 Gew.-%, an der Bisphenol-A- und/oder -F-Epoxid, insbesondere Bisphenol-A-Epoxid, basierten Formulierung mit Silikonelastomerpartikeln. Dies hat sich als vorteilhaft erwiesen. Bei einem höheren Anteil kann zwar die Sprödigkeit, aber auch die Bruchspannung abnehmen, der thermische Ausdehnungskoeffizient jedoch zunehmen. Zum Beispiel kann das Reaktionsharzsystem beziehungsweise die Vergussmasse, bezogen auf das Gesamtgewicht des Reaktionsharzsystem beziehungsweise der Vergussmasse, ≥ 3 Gew.-% bis ≤ 15 Gew.-%, beispielsweise ≥ 5 Gew.-% bis ≤ 15 Gew.-% an der Bisphenol-A- und/oder -F-Epoxid, insbesondere Bisphenol-A-Epoxid, basierten Formulierung mit Silikonelastomerpartikeln umfassen.

Im Rahmen einer weiteren Ausführungsform umfasst das Reaktionsharzsystem beziehungsweise die Vergussmasse, bezogen auf das Gesamtgewicht des Reaktionsharzsystem beziehungsweise der Vergussmasse, ≥ 0 Gew.-% bis ≤ 85 Gew.-%, an dem mindestens einen, insbesondere wärmeleitenden, Füllstoff. Zum Beispiel kann das Reaktionsharzsystem beziehungsweise die Vergussmasse, bezogen auf das Gesamtgewicht des Reaktionsharzsystem beziehungsweise der Vergussmasse, ≥ 50 Gew.-% bis ≤ 85 Gew.-% an dem mindestens einen, insbesondere wärmeleitenden, Füllstoff umfassen. So kann vorteilhafterweise eine hohe Wärmeleitfähigkeit, beispielsweise von ≥ 0,6 W/(m·K), insbesondere von ≥ 0,8 W/(m·K), zum Beispiel von ≥ 1,5 W/(m·K) oder sogar von ≥ 1,8 W/(m·K), erzielt werden.

Im Rahmen einer weiteren Ausführungsform umfasst das Reaktionsharzsystem beziehungsweise die Vergussmasse mindestens ein Additiv. Zum Beispiel kann das Reaktionsharzsystem beziehungsweise die Vergussmasse, bezogen auf das Gesamtgewicht des Reaktionsharzsystem beziehungsweise der Vergussmasse, weiterhin ≥ 0 Gew.-% bis ≤ 1 Gew.-%, beispielsweise ≥ 0,2 Gew.-% bis ≤ 0,7 Gew.-%, an dem mindestens einen Additiv umfassen.

Einige beispielhafte Zusammensetzungen für das Reaktionsharzsystem beziehungsweise die Vergussmasse sind in Tabelle 1 wiedergegeben.

**Tabelle 1: Beispiele für Zusammensetzungen des Reaktionsharzsystem beziehungsweise der Vergussmasse in Gew.-%**

| | 1 | 2 | 3 | 4 | 5 | 6 | 7 | 8 |
|---|---|---|---|---|---|---|---|---|
| EP-Harz auf Basis von Bisphenol A u./o. F | 76,5 | 63 | 52 | 45,6 | 15,2 | 9,3 | 20,5 | 15,8 |
| Aminhärter | 21,5 | 36 | 13 | 23,5 | 4,2 | 5,3 | 5,1 | 8,2 |
| Silikon | 1,5 | 0,5 | 34,6 | 30,5 | 0,3 | 0,2 | 13,7 | 10,5 |
| Füllstoffe | 0 | 0 | 0 | 0 | 80 | 85 | 60 | 65 |
| Additive | 0,5 | 0,5 | 0,4 | 0,4 | 0,3 | 0,2 | 0,7 | 0,5 |

Einige spezielle beispielhafte Zusammensetzungen für das Reaktionsharzsystem beziehungsweise die Vergussmasse und deren Eigenschaften sind in Tabelle 2 wiedergegeben.

**Tabelle 2: Beispiele für Zusammensetzungen des Reaktionsharzsystem beziehungsweise der Vergussmasse in Gew.-% und deren Eigenschaften**

| | 9 | 10 | 11 | 12 |
|---|---|---|---|---|
| Epoxidharz Bis. A / F | 22 | 21,55 | 26,3 | 11,7 |
| Tetraethylenpentamin | 11,5 | 11,8 | 5,68 | 6 |
| Silikon | 11 | 7,7 | 13,2 | 5,9 |
| Al(OH)₃ | 55 | 58,5 | 9,87 | 29,3 |
| BN | - | - | 44,4 | - |
| SiO₂ | - | - | - | 46,8 |
| Additiv | 0,5 | 0,45 | 0,55 | 0,3 |
| Eigenschaften | | | | |
| Glasübergangstemperatur Tg [°C] | 45 | 40 | | 45 |
| Thermischer Ausdehnungskoeffizient < Tg [10⁻⁶ 1/°C] | 62 | 54 | | 27 |
| Wärmeleitfähigkeit [W/m·K] | 0,67 | 0,82 | 1,5 | 1,85 |

Es wurden folgende Ausgangsmaterialien verwendet:
- Epilox A19-00, Leuna: Epoxidharz Bisphenol A
- Epilox F16-01, Leuna: Epoxidharz Bisphenol F
- Albidur EP 2240A, Evonik: Silikon-Modifier als Emulsion, Bisphenol-A-Epoxid basierte Formulierung mit Silikonelastomerpartikeln (40 Gew.-% Silikonanteil),
- HY 842, Huntsman: Aminhärter: Tetraethylenpentamin
- HY 956, Huntsman: Aminhärter: Triethylentetramin
- H31, Quarzwerke: Sand (SiO₂), Körnung < 0,1 mm - 0,5 mm
- Apyral 2 E, Nabaltec: Aluminiumhydroxid Al(OH)₃

### Additive:

- DF100, Evonik: Entschäumer auf Silikonbasis
- W980, BYK: Netz- und Dipergieradditiv Lösung eines Salzes ungesättigter Polyaminamide und saurer Polyester
- W9010, BYK: Copolymer mit sauren Gruppen

Im Rahmen einer speziellen Ausführungsform umfasst das Reaktionsharzsystem beziehungsweise die Vergussmasse, bezogen auf das Gesamtgewicht des Reaktionsharzsystem beziehungsweise der Vergussmasse, ≥ 9 Gew.-% bis ≤ 30 Gew.-% an dem mindestens einen Epoxidharz auf Basis von Bisphenol A und/oder Bisphenol F, ≥ 4 Gew.-% bis ≤ 12 Gew.-% an dem mindestens einen Aminhärter, ≥ 3 Gew.-% bis ≤ 15 Gew.-%, beispielsweise ≥ 5 Gew.-% bis ≤ 15 Gew.-%, an der Bisphenol-A- und/oder -F-Epoxid, insbesondere Bisphenol-A-Epoxid, basierten Formulierung mit Silikonelastomerpartikeln und ≥ 50 Gew.-% bis ≤ 85 Gew.-% an dem mindestens einen, insbesondere wärmeleitenden, Füllstoff. Zum Beispiel kann dabei das Reaktionsharzsystem beziehungsweise die Vergussmasse, bezogen auf das Gesamtgewicht des Reaktionsharzsystem beziehungsweise der Vergussmasse, weiterhin ≥ 0 Gew.-% bis ≤ 1 Gew.-%, beispielsweise ≥ 0,2 Gew.-% bis ≤ 0,7 Gew.-%, an dem mindestens einen Additiv umfassen.

Hinsichtlich weiterer technischer Merkmale und Vorteile des Reaktionsharzsystems beziehungsweise der Vergussmasse wird hiermit explizit auf die Erläuterungen im Zusammenhang mit dem erfindungsgemäßen Verfahren und dem erfindungsgemäßen Batteriesystem sowie auf die Figuren und die Figurenbeschreibung verwiesen.

### Zeichnungen

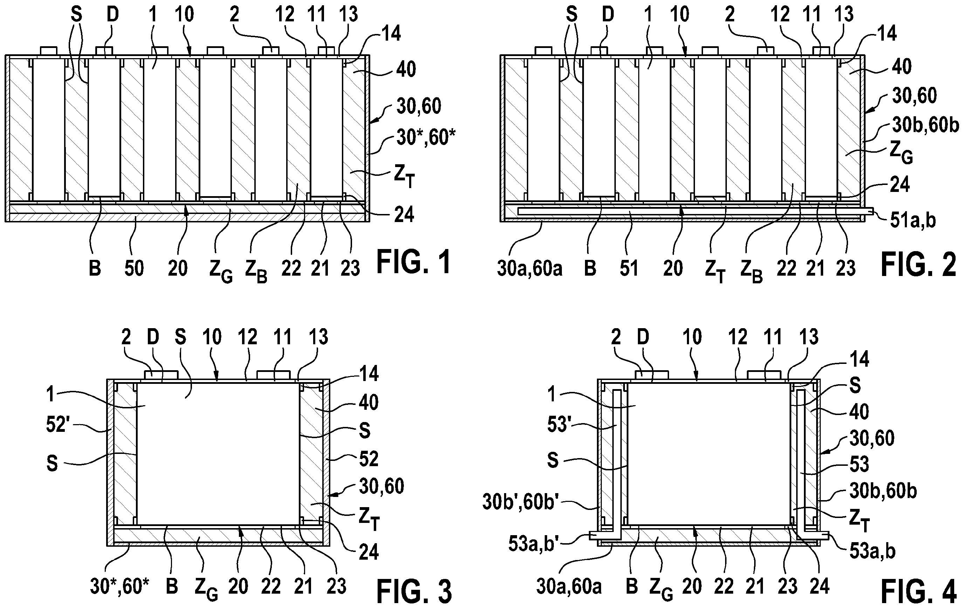

Weitere Vorteile und vorteilhafte Ausgestaltungen der erfindungsgemäßen Gegenstände werden durch die Zeichnungen veranschaulicht und in der nachfolgenden Beschreibung erläutert. Dabei ist zu beachten, dass die Zeichnungen nur beschreibenden Charakter haben und nicht dazu gedacht sind, die Erfindung in irgendeiner Form einzuschränken. Es zeigen
Fig. 1-7 schematische Querschnitte zur Veranschaulichung von mehreren Ausführungsformen eines erfindungsgemäßen Batteriesystems und/oder Herstellungsverfahrens, in denen Batteriezellen durch ein oberes und unteres Montagegitter positioniert und zumindest teilweise mit mindestens einer Vergussmasse vergossen sind;

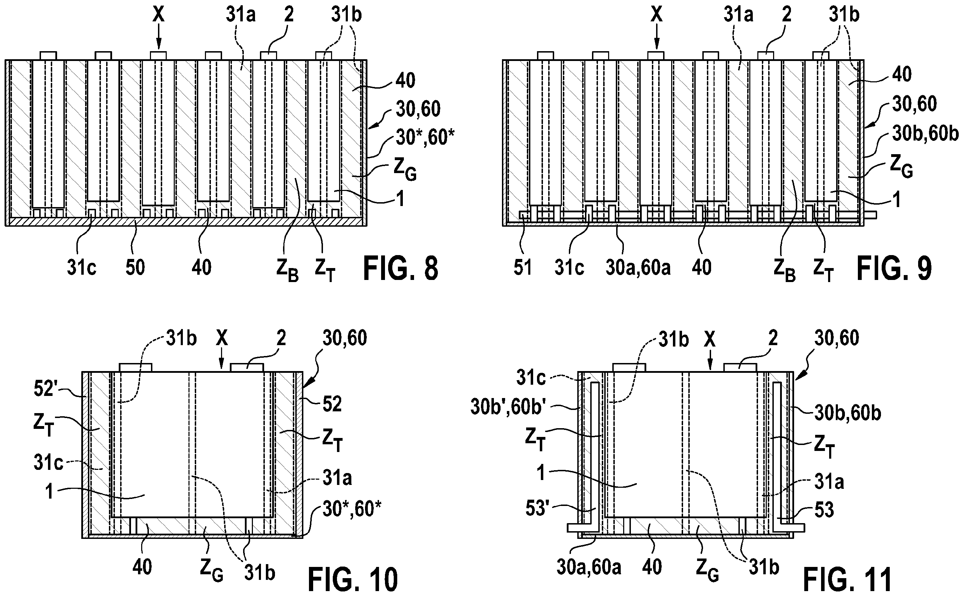

Fig. 8-14 schematische Querschnitte zur Veranschaulichung von mehreren weiteren Ausführungsformen eines erfindungsgemäßen Batteriesystems und/oder Herstellungsverfahrens, in denen Batteriezellen durch Positionsrippen und/oder Positionsvorsprünge eines Batteriesystemgehäuses oder einer Vergussform positioniert und zumindest teilweise mit mindestens einer Vergussmasse vergossen sind;

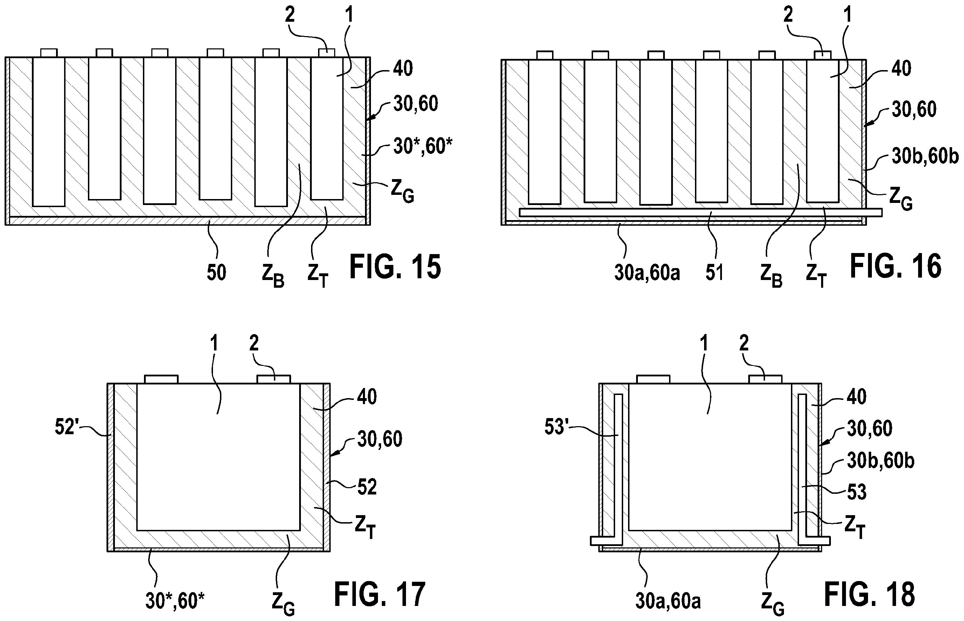

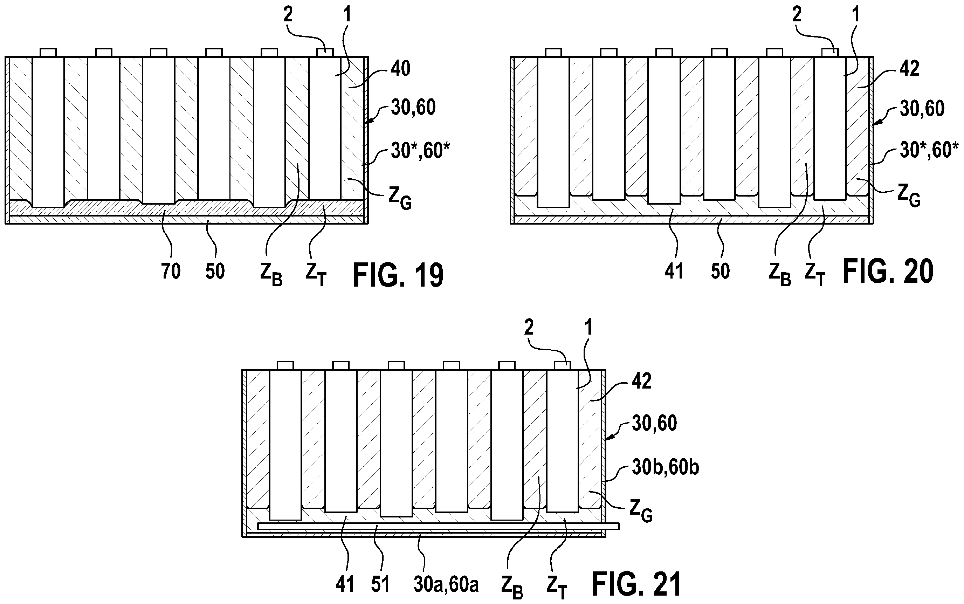

Fig. 15-21 schematische Querschnitte zur Veranschaulichung von mehreren weiteren Ausführungsformen eines erfindungsgemäßen Batteriesystems und/oder Herstellungsverfahrens, in dem Batteriezellen, welche bei der Herstellung durch einen Montagegreifer positioniert wurden, zumindest teilweise mit mindestens einer Vergussmasse vergossen sind;

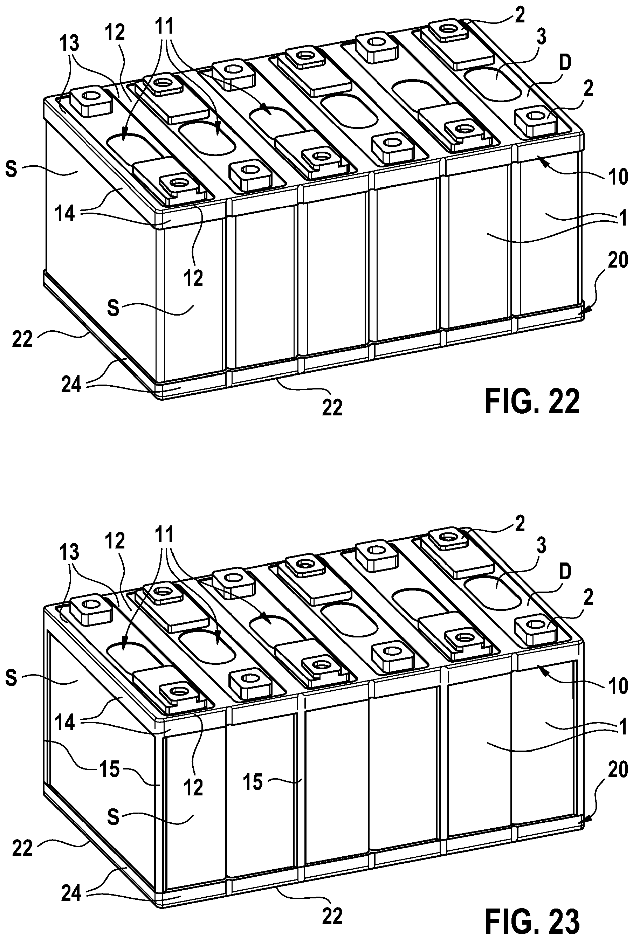

Fig. 22-26 schematische, perspektivische Ansichten zur Veranschaulichung von mehreren weiteren Ausführungsformen eines erfindungsgemäßen Batteriesystems und/oder Herstellungsverfahrens, in denen Batteriezellen in ein oberes und unteres Montagegitter eingesteckt werden;

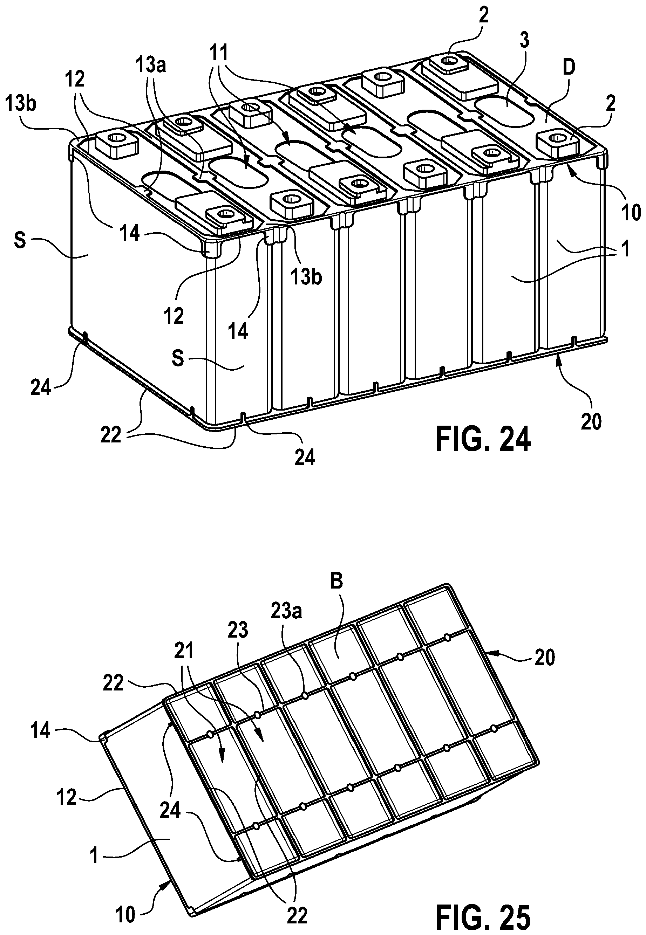

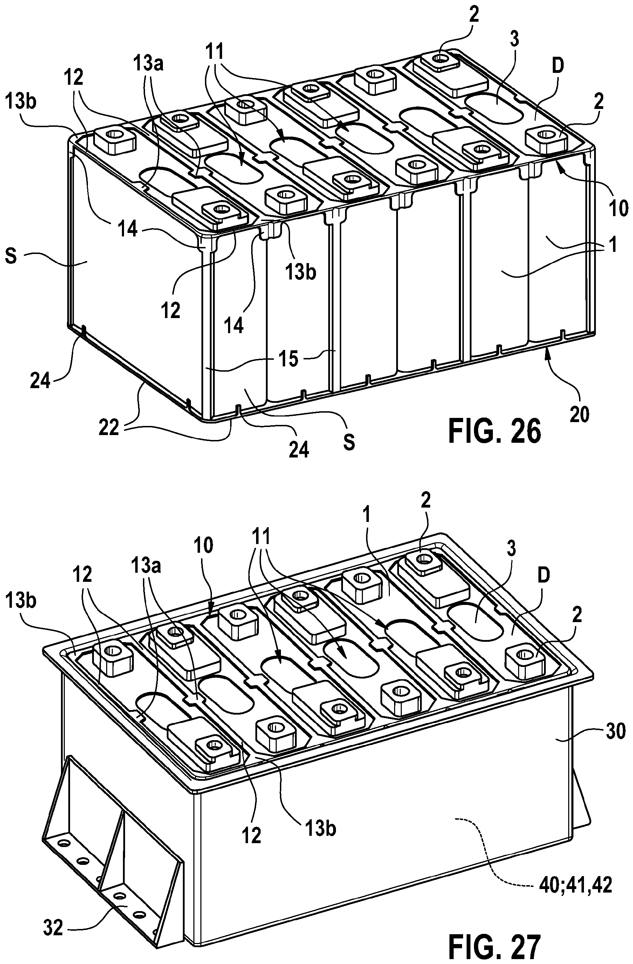

Fig. 27 eine schematische, perspektivische Ansicht einer weiteren Ausführungsform eines erfindungsgemäßen Batteriesystems mit einem Batteriesystemgehäuse mit Montagewinkeln zur Montage an einer Temperierplatte, in dem Batteriezellen, mindestens ein Montagegitter und das Batteriesystemgehäuse zumindest teilweise mit mindestens einer Vergussmasse vergossen sind und welches aus einer in Fig. 24-26 gezeigten Montagegitter-Batteriezellen-Anordnung herstellbar ist;

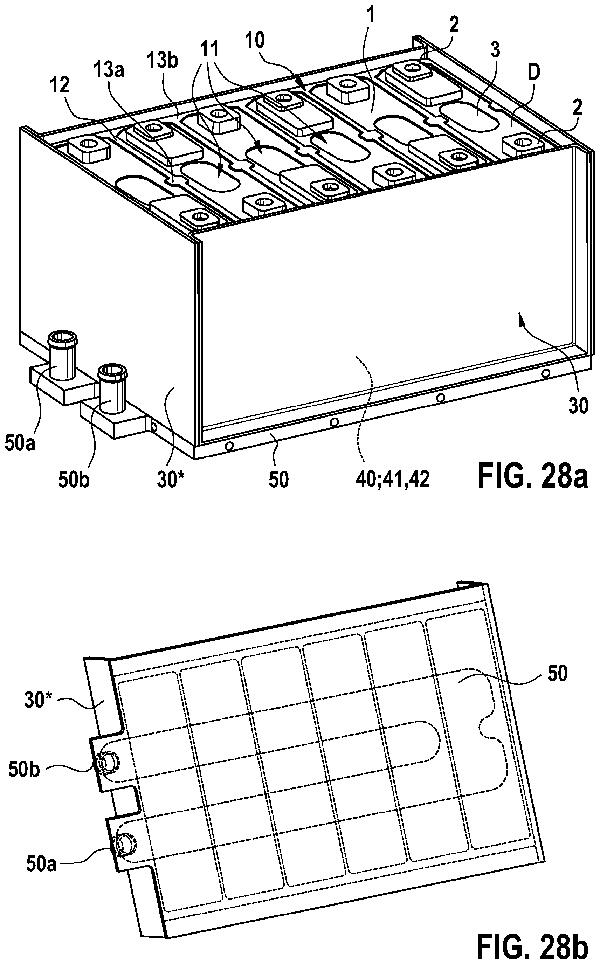

Fig. 28a,b schematische, perspektivische Ansichten einer weiteren Ausführungsform eines erfindungsgemäßen Batteriesystems mit einem Batteriesystemgehäuse aus einem rahmenförmigen Grundkörper und einer daran vormontierten, als Boden dienenden Temperierplatte, in dem Batteriezellen, mindestens ein Montagegitter und das Batteriesystemgehäuse zumindest teilweise mit mindestens einer Vergussmasse vergossen sind und welches aus einer in Fig. 24-26 gezeigten Montagegitter-Batteriezellen-Anordnung herstellbar ist;

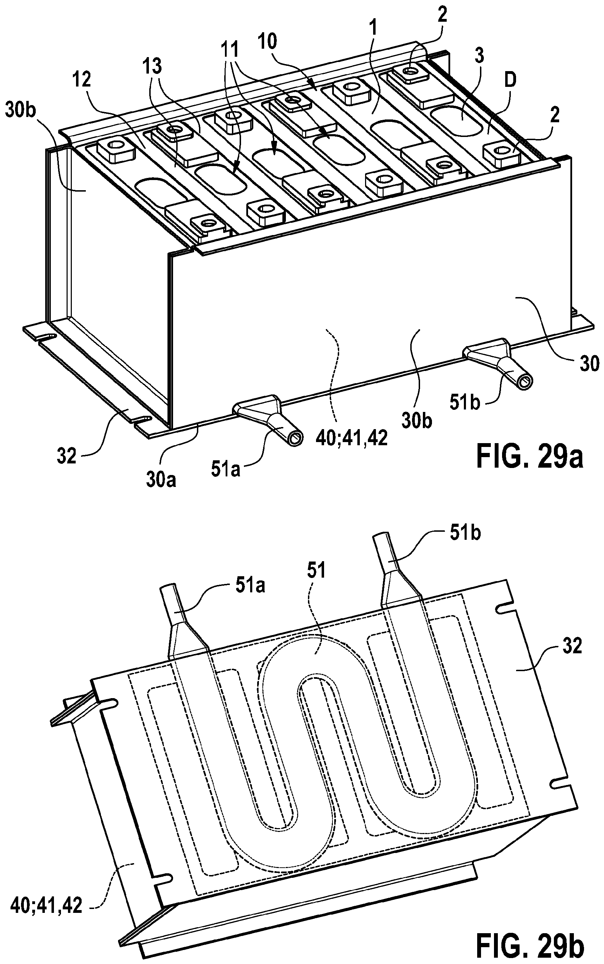

Fig. 29a,b schematische, perspektivische Ansichten einer weiteren Ausführungsform eines erfindungsgemäßen Batteriesystems mit einem Batteriesystemgehäuse mit einer an dessen inneren Bodenfläche vormontierten, insbesondere W-förmigen, Temperiermittelleitung, in dem Batteriezellen, mindestens ein Montagegitter und das Batteriesystemgehäuse zumindest teilweise mit mindestens einer Vergussmasse vergossen sind und welches aus einer in Fig. 22 und 23 gezeigten Montagegitter-Batteriezellen-Anordnung herstellbar ist;

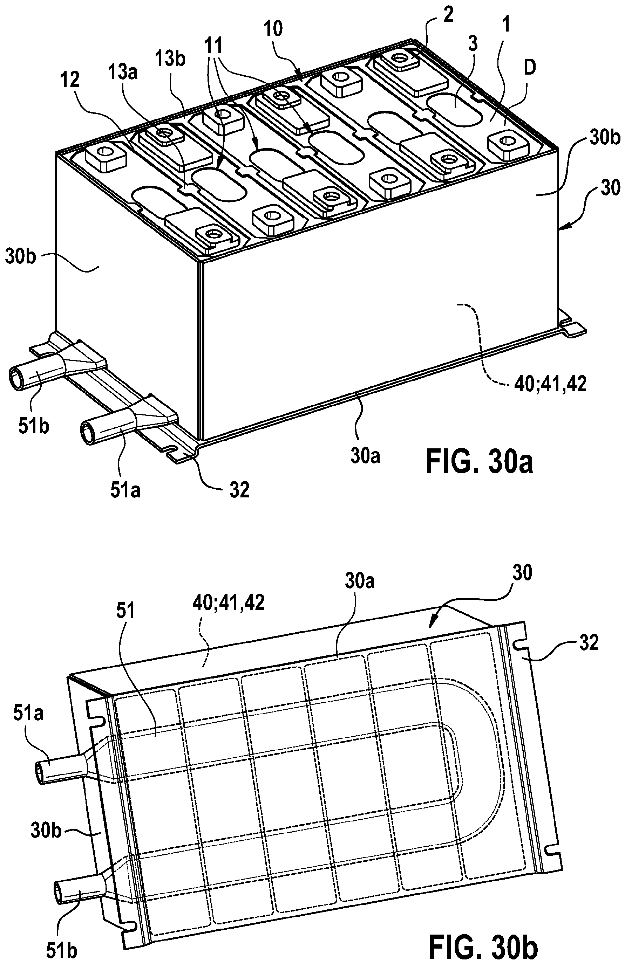

Fig. 30a,b schematische, perspektivische Ansichten einer weiteren Ausführungsform eines erfindungsgemäßen Batteriesystems mit einem Batteriesystemgehäuse mit einer an dessen inneren Bodenfläche vormontierten, insbesondere U-förmigen, Temperiermittelleitung, in dem Batteriezellen, mindestens ein Montagegitter und das Batteriesystemgehäuse zumindest teilweise mit mindestens einer Vergussmasse vergossen sind und welches aus einer in Fig. 24-26 gezeigten Montagegitter-Batteriezellen-Anordnung herstellbar ist;

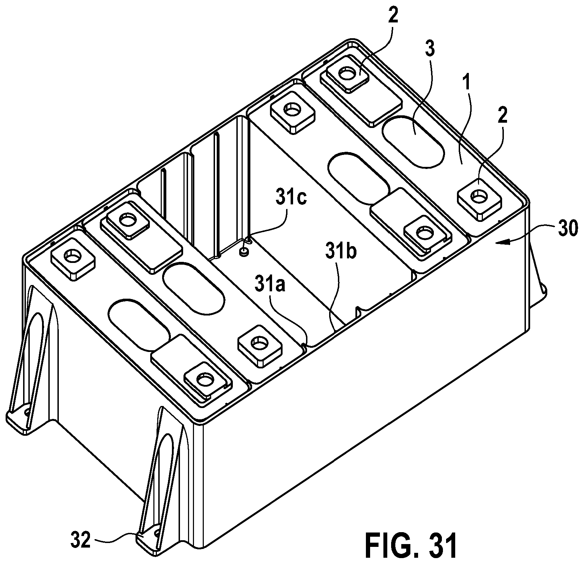

Fig. 31 eine schematische, perspektivische Ansicht zur Veranschaulichung einer weiteren Ausführungsform eines erfindungsgemäßen Batteriesystems und/oder Herstellungsverfahrens, in der Batteriezellen in ein Batteriesystemgehäuse mit Positionsrippen und/oder Positionsvorsprüngen eingesteckt werden;

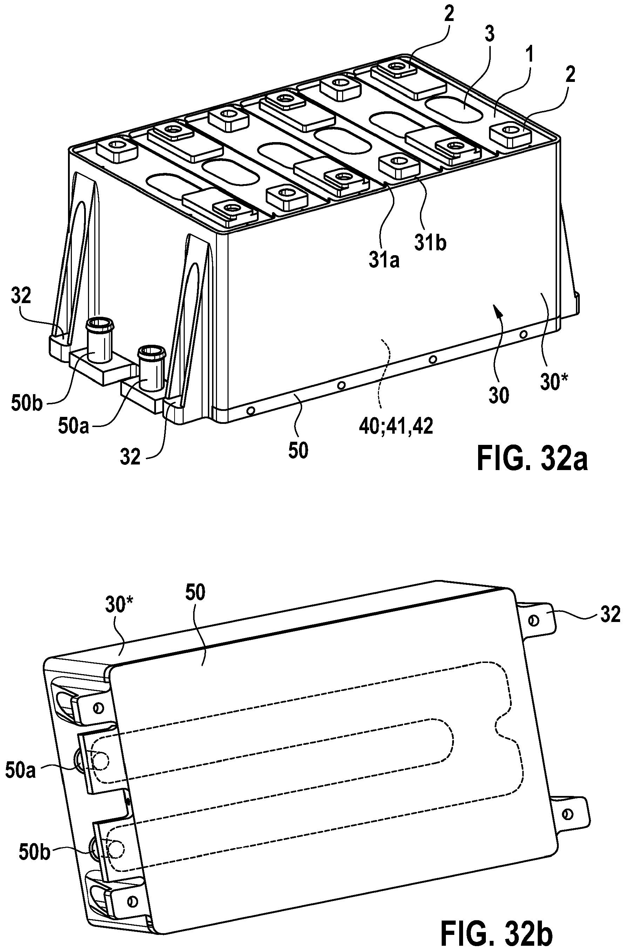

Fig. 32a,b eine schematische, perspektivische Ansicht einer weiteren Ausführungsform eines erfindungsgemäßen Batteriesystems mit einem Batteriesystemgehäuse mit Positionsrippen und/oder Positionsvorsprünge aus einem rahmenförmigen Grundkörper und einer daran vormontierten, als Boden dienenden Temperierplatte, in dem Batteriezellen und das Batteriesystemgehäuse zumindest teilweise mit mindestens einer Vergussmasse vergossen sind;

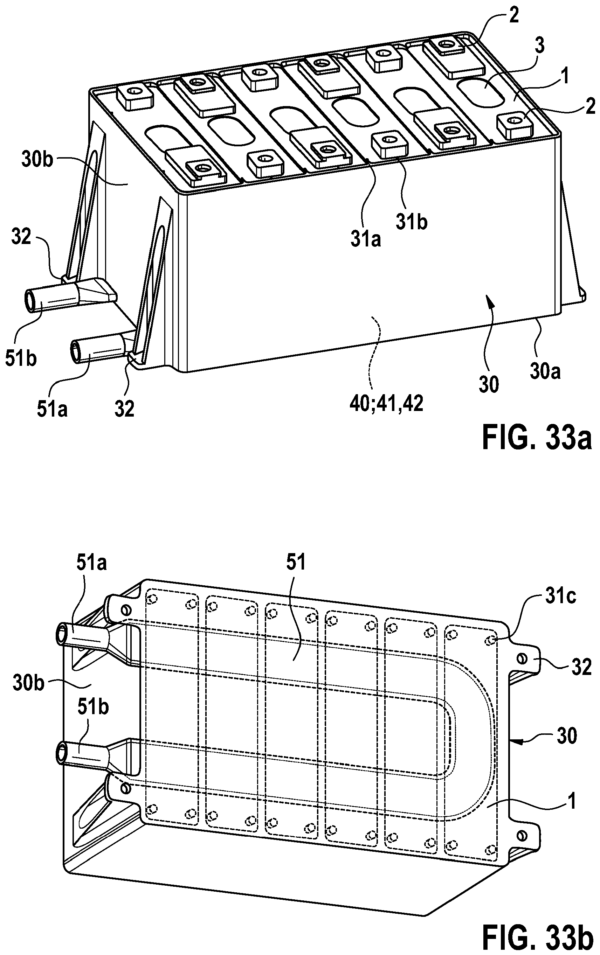

Fig. 33a,b eine schematische, perspektivische Ansicht einer weiteren Ausführungsform eines erfindungsgemäßen Batteriesystems mit einem Batteriesystemgehäuse mit Positionsrippen und/oder Positionsvorsprünge und mit einer an dessen inneren Bodenfläche vormontierten, insbesondere U-förmigen, Temperiermittelleitung, in dem Batteriezellen, die Temperiermittelleitung und das Batteriesystemgehäuse zumindest teilweise mit mindestens einer Vergussmasse vergossen sind;

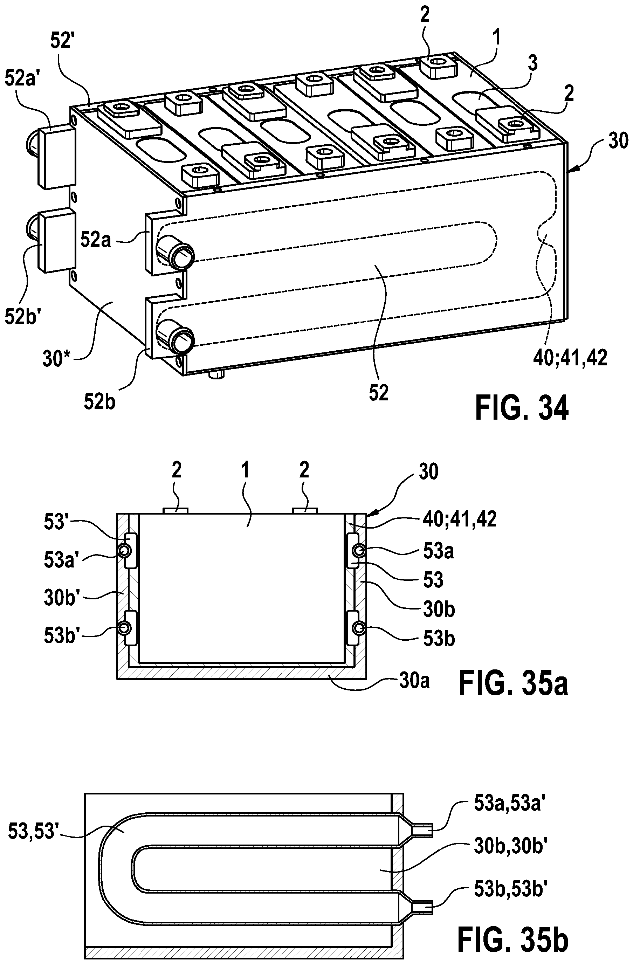

Fig. 34 eine schematische, perspektivische Ansicht einer weiteren Ausführungsform eines erfindungsgemäßen Batteriesystems mit einem Batteriesystemgehäuse aus einem Grundkörper und zwei, an gegenüberliegenden Seiten daran vormontierten, als Seitenwände dienenden Temperierplatten, in dem Batteriezellen und die Temperierplatten zumindest teilweise mit mindestens einer Vergussmasse vergossen sind; und
Fig. 35a,b schematische Querschnitte einer weiteren Ausführungsform eines erfindungsgemäßen Batteriesystems mit einem Batteriesystemgehäuse mit zwei, an Innenflächen gegenüberliegender Seitenwände des Batteriesystemgehäuses vormontierten Temperiermitteleitungen, in dem Batteriezellen und die Temperiermittelleitungen zumindest teilweise mit einer Vergussmasse vergossen sind.

Die Figuren 1 bis 35 zeigen Ausführungsformen eines erfindungsgemäßen Batteriesystems beziehungsweise veranschaulichen Ausführungsformen eines erfindungsgemäßen Verfahrens. Bei den gezeigten Batteriesystemen kann es sich beispielsweise um Lithium-Batteriesysteme, zum Beispiel Lithium-Ionen-Batteriemodule und/oder Lithium-Ionen-Batteriepacks, handeln. Dabei können die Batteriezellen 1 beispielsweise Lithium-Zellen, zum Beispiel Lithium-Ionen-Zellen, sein. Zum Beispiel können die Batteriezellen 1 jeweils ein, insbesondere festes beziehungsweise starres, beispielsweise metallisches, Zellgehäuse aufweisen. Zum Beispiel können die Batteriezellen, insbesondere prismatische, Gehäusezellen, so genannte Hard-Case-Zellen (Englisch: Hard Case Cells), sein.

Die in den Figuren 1 bis 35b gezeigten Ausführungsformen haben gemeinsam, dass Batteriezellen 1 zumindest teilweise mit mindestens einer Vergussmasse 40;41,42 vergossen werden beziehungsweise sind. Die mindestens eine Vergussmasse 40;41,42 kann dabei insbesondere elektrisch isolierend sowie gegebenenfalls wärmeleitend sein. Dabei werden die Batteriezellen 1, insbesondere vor dem Vergießen mit der mindestens einen Vergussmasse 40;41,42, positioniert.

Im Rahmen der in den Figuren 1 bis 7, 22 bis 30b gezeigten Ausführungsformen werden beziehungsweise sind die Batteriezellen 1 durch mindestens ein Montagegitter 10,20 zur Positionierung von Batteriezellen 1 positioniert.

Im Rahmen der in den Figuren 2 bis 14, 31 bis 33b gezeigten Ausführungsformen werden beziehungsweise sind die Batteriezellen 1 durch Positionsrippen und/oder Positionsvorsprünge 31a, 31b, 31c eines Batteriesystemgehäuses 30, welche 31a, 31b, 31c zur Positionierung von Batteriezellen 1 ausgelegt sind, positioniert.

Im Rahmen der in den Figuren 15 bis 21 gezeigten Ausführungsformen wurden die Batteriezellen 1 durch einen Montagegreifer (nicht dargestellt) zur Positionierung von Batteriezellen 1 positioniert.

Im Rahmen der in den Figuren 34 bis 35b gezeigten Ausführungsformen wurden beziehungsweise sind die Batteriezellen 1 zusammen mit seitlich der Batteriezellen 1 angeordneten Temperierplatten 52,52' beziehungsweise Temperiermittelleitungen 53,53' zumindest teilweise mit mindestens einer Vergussmasse 40 vergossen. Die Positionierung der Batteriezellen 1 kann dabei beispielsweise durch mindestens ein Montagegitter, Positionsrippen und/oder Positionsvorsprünge oder einen Montagegreifer (nicht dargestellt) erfolgen.

Das Vergießen mit der mindestens einen Vergussmasse 40;41,42 kann im Rahmen der in den Figuren 1 bis 35b gezeigten Ausführungsformen beispielsweise dadurch erfolgen, dass die Batteriezellen 1 zunächst in den Innenraum einer Vergussform 60, beispielsweise einer Wiederholform oder verlorenen Form, zum Beispiel in Form einer Vergusswanne, eingebracht werden, welche mit der mindestens einen Vergussmasse 40;41,42 zumindest teilweise gefüllt wird. Nach dem Aushärten der mindestens einen Vergussmasse 40;41,42 können die Batteriezellen 1 mit der Vergussmasse 40;41,42 sowie gegebenenfalls weiteren Bauteilen eine Einheit, insbesondere eine, die Batteriezellen 1 umfassende Vergussmasseneinheit, bilden, welche wieder aus der Vergussform 60 gelöst wird. Diese Vergussmasseneinheit kann dann in ein Batteriesystemgehäuse 30 eingesetzt werden. Die Einheit kann dabei jedoch gegebenenfalls auch ohne zusätzliches Batteriesystemgehäuse 30 eingesetzt werden und beispielsweise lediglich in einen Montagerahmen eingesetzt und/oder auf einer Montageplatte befestigt werden.

Das Vergießen mit der mindestens einen Vergussmasse 40;41,42 kann im Rahmen der in den Figuren 1 bis 35b gezeigten Ausführungsformen beispielsweise jedoch auch dadurch erfolgen, dass die Batteriezellen 1 direkt in den Innenraum eines Batteriesystemgehäuses 30 eingebracht werden, welcher zumindest teilweise mit der mindestens einen Vergussmasse 40;41,42 gefüllt wird. Nach dem Aushärten der mindestens einen Vergussmasse 40;41,42 können dann die Batteriezellen 1 eine Einheit mit dem Batteriesystemgehäuse 30 und der Vergussmasse 40;41,42 bilden.

Die Figuren 1 bis 7 zeigen schematische Querschnitte durch mehrere Ausführungsformen eines erfindungsgemäßen Batteriesystems, in denen Batteriezellen 1 durch ein oberes Montagegitter 10, beispielsweise Fixiergitter, zur Positionierung von Batteriezellen 1 und durch ein unteres Montagegitter 20, beispielsweise Fixiergitter, zur Positionierung von Batteriezellen 1 positioniert und zumindest teilweise mit mindestens einer Vergussmasse 40;41,42 vergossen sind. Dabei sind die Batteriezellen 1 durch das obere 10 und untere 20 Montagegitter unter Ausbildung von batteriezellenbeabstandenden Zwischenräumen Z_{B} beabstandet zueinander und unter Ausbildung von gehäuse- oder vergussformbeabstandenden Zwischenräumen Z_{G} beabstandet zu dem Batteriesystemgehäuse 30 oder der Vergussform 60 und unter Ausbildung mindestens eines temperiermittelbeabstandenden Zwischenraums Z_{T} beabstandet zu einem Temperiermittel, beispielsweise einer Temperiermittelleitung 51,53,53' beziehungsweise einer Temperierplatte 50,52,52' angeordnet. Die Batteriezellen 1 und das Montagegitter 10,20 sind dabei zumindest teilweise mit mindestens einer Vergussmasse 40;41,42 vergossen. Die Figuren 1 bis 7 zeigen, dass dabei die batteriezellenbeabstandenden Zwischenräume Z_{B}, die gehäuse- oder vergussformbeabstandenden Zwischenräume Z_{G} und die temperiermittelbeabstandende Zwischenräume Z_{T} mit mindestens einer Vergussmasse 40;41,42 gefüllt sind. Insbesondere zeigen die Figuren 1 bis 7, dass dabei die Batteriezellen 1 und insbesondere auch die Montagegitter 10,20 jeweils in dem Innenraum des Batteriesystemgehäuses 30 oder der Vergussform 60 angeordnet sind, welcher mit der mindestens einen Vergussmasse 40;41,42 gefüllt, beispielsweise - insbesondere im Wesentlichen vollständig - aufgefüllt, ist.

Figur 1 deutet an, dass im Rahmen der darin gezeigten Ausführungsform das obere Montagegitter 10 und das untere Montagegitter 20 jeweils Gitteröffnungen 11,21 aufweisen, in welche jeweils eine Batteriezelle 1 eingesteckt ist. Die Batteriezellen 1 sind dabei jeweils umfänglich von gitteröffnungsbildenden Gitterstegen 12,22 des oberen 10 beziehungsweise unteren 20 Montagegitters umgeben. Dabei sind die Gitteröffnungen 11 des oberen Montagegitters 10 derart ausgestaltet, dass darin die Pole 2 der Batteriezellen 1 und insbesondere auch die Sicherheitsventile (nicht dargestellt in den Figuren 1 bis 7) der Batteriezellen 1 offen liegen und sich insbesondere durch die Gitteröffnungen 11 des oberen Montagegitters 10 hindurch nach Außen erstrecken. Dabei weisen das obere Montagegitter 10 und das untere Montagegitter 20 jeweils vertikale Anschlagsabschnitte 13,23 und laterale Anschlagsabschnitte 14,24 auf, welche als Anschlag für die Batteriezellen 1 und insbesondere auch zur Beabstandung von benachbarten Batteriezellen 1 und zur Beabstandung der Batteriezellen 1 von dem Batteriesystemgehäuse 30 beziehungsweise von der Vergussform 60 und zur Beabstandung der Batteriezellen 1 von einem Temperiermittel 50 dienen. Dabei dienen die vertikalen Anschlagsabschnitte 13 des oberen Montagegitters 10 als oberer Anschlag für die Batteriezellen 1, insbesondere für die Deckfläche D der Batteriezellen 1, wobei die lateralen Anschlagsabschnitte 14 des oberen Montagegitters 10 als seitlicher Anschlag für die Batteriezellen 1, insbesondere für die Seitenflächen S der Batteriezellen 1 dienen. Die vertikalen Anschlagsabschnitte 23 des unteren Montagegitters 20 dienen dabei insbesondere als unterer Anschlag für die Batteriezellen 1, insbesondere für die Bodenfläche B der Batteriezellen 1, wobei die lateralen Anschlagsabschnitte 24 des unteren Montagegitters 20 als seitlicher Anschlag für die Batteriezellen 1, insbesondere für die Seitenflächen S der Batteriezellen 1, dienen. Die vertikalen und lateralen Anschlagsabschnitte 13,14,23,24 des oberen 10 und unteren 20 Montagegitters sind dabei derart ausgestaltet, dass diese 13,14,23,24 lediglich Randabschnitte, beispielsweise der Deckflächen D beziehungsweise der Seitenflächen S beziehungsweise der Bodenflächen B, der Batteriezellen 1 bedecken.

Figur 1 zeigt, dass im Rahmen der darin gezeigten Ausführungsform lediglich eine Vergussmasse 40 eingesetzt ist (einfacher Verguss). Mit der Vergussmasse 40 sind dabei die Batteriezellen 1 und die Montagegitter 10,20 vergossen. Dabei sind die batteriezellenbeabstandenden Zwischenräume Z_{B}, die gehäuse- oder vergussformbeabstandenden Zwischenräume Z_{G} und der temperiermittelbeabstandende Zwischenraum Z_{T} mit der Vergussmasse 40 gefüllt. Insbesondere ist dabei der Innenraum des Batteriesystemgehäuses 30 beziehungsweise der Vergussform 60 mit der Vergussmasse 40 gefüllt, beispielsweise - insbesondere im Wesentlichen vollständig - aufgefüllt.

Figur 1 zeigt, dass im Rahmen der darin gezeigten Ausführungsform eine Temperierplatte 50, zum Beispiel eine flache Kühlplatte, den Boden des Batteriesystemgehäuses 30 oder der Vergussform 60, welche später wieder entfernt wird, beispielsweise einer verlorenen Form, bildet. Beispielsweise kann das Batteriesystemgehäuse 30 beziehungsweise die Vergussform 60 dabei zumindest zweiteilig sein. Das Batteriesystemgehäuse 30 beziehungsweise die Vergussform 60 ist dabei aus einem Grundkörper 30*,60*, beispielsweise in Form eines Rahmens, und einer, den Innenraum des Batteriesystemgehäuses 30 beziehungsweise der Vergussform 60 begrenzenden, als Boden des Batteriesystemgehäuses 30 beziehungsweise der Vergussform 60 dienenden Temperierplatte 50, zum Beispiel einer kühlbaren Bodenplatte, zusammensetzbar beziehungsweise zusammengesetzt. Dabei ist die Boden bildende Temperiermittelplatte 50 - ebenso wie die Batteriezellen 1 und die Montagegitter 10,20 - zumindest teilweise mit der Vergussmasse 40 vergossen.

Die in Figur 2 gezeigte Ausführungsform unterscheidet sich im Wesentlichen dadurch von der in Figur 1 gezeigten Ausführungsform, dass - insbesondere anstelle der Boden bildenden Temperierplatte 50 - unterhalb der Batteriezellen 1 eine Temperiermittelleitung 51, insbesondere in Form einer Leitungsschlange oder eines Leitungsrohrs, zum Beispiel eine Kühlschlange, angeordnet ist. Dabei ist die Temperiermittelleitung 51 insbesondere zwischen den Batteriezellen 1, insbesondere den Bodenflächen B der Batteriezellen 1, und dem Boden 30a,60a des Batteriesystemgehäuses 30 beziehungsweise der Vergussform 60 angeordnet. Die Temperiermittelleitung 51 ist dabei - ebenso wie die Batteriezellen 1 und die Montagegitter 10,20 - zumindest teilweise mit der Vergussmasse 40 vergossen. Insbesondere ist die Temperiermittelleitung 51 dabei unterhalb der Batteriezellen 1 in Vergussmasse 40 eingegossen. Figur 2 zeigt, dass die Temperiermittelleitung 51 über Temperiermittelanschlüsse 51a,b außerhalb des Batteriesystemgehäuses 30 beziehungsweise außerhalb der Vergussmasse 40 anschließbar ist. Insbesondere ist die Temperiermittelleitung 51 dabei durch eine Seitenwand 30b,60b des Batteriesystemgehäuses 30 beziehungsweise der Vergussform 60 hindurchgeführt.

Die in Figur 3 gezeigte Ausführungsform unterscheidet sich im Wesentlichen dadurch von der in Figur 1 gezeigten Ausführungsform, dass das Batteriesystemgehäuse 30 beziehungsweise die Vergussform 60 - insbesondere anstelle der Boden bildenden Temperierplatte 50 - zwei Temperierplatten 52,52', zum Beispiel zwei flache Kühlplatten, aufweist, welche, insbesondere einander gegenüberliegende, Seitenwände des Batteriesystemgehäuses 30 beziehungsweise der Vergussform 60, zum Beispiel in Form einer verlorenen Form, bilden. Beispielsweise kann das Batteriesystemgehäuse 30 beziehungsweise die Vergussform 60 dabei zumindest dreiteilig sein. Das Batteriesystemgehäuse 30 beziehungsweise die Vergussform 60 ist dabei aus einem Grundkörper 30*,60*, beispielsweise in Form einer Platte, und zwei, den Innenraum des Batteriesystemgehäuses 30 beziehungsweise der Vergussform 60 begrenzenden, als Seitenwände des Batteriesystemgehäuses 30 beziehungsweise der Vergussform 60 dienenden Temperierplatten 52,52', zum Beispiel kühlbaren Seitenwänden, zusammensetzbar beziehungsweise zusammengesetzt. Dabei sind die Seitenwände bildenden Temperiermittelplatten 52,52' - ebenso wie die Batteriezellen 1 und die Montagegitter 10,20 - zumindest teilweise mit der Vergussmasse 40 vergossen.

Die in Figur 4 gezeigte Ausführungsform unterscheidet sich im Wesentlichen dadurch von der in Figur 1 gezeigten Ausführungsform, dass - insbesondere anstelle der Boden bildenden Temperierplatte 50 - seitlich der Batteriezellen 1 zwei Temperiermittelleitungen 53,53', insbesondere in Form von Leitungsschlangen oder Leitungsrohren, zum Beispiel Kühlschlangen, angeordnet sind. Dabei sind die Temperiermittelleitungen 53,53' jeweils zwischen den Batteriezellen 1, insbesondere Seitenflächen S der Batteriezellen 1, und, insbesondere einander gegenüberliegenden, Seitenwänden 30b,30b',60b,60b' des Batteriesystemgehäuses 30 beziehungsweise der Vergussform 60 angeordnet. Die Temperiermittelleitungen 53,53' sind dabei - ebenso wie die Batteriezellen 1 und die Montagegitter 10,20 - zumindest teilweise mit der Vergussmasse 40 vergossen. Insbesondere sind die Temperiermittelleitungen 53,53' dabei jeweils seitlich, insbesondere auf einander gegenüberliegenden Seiten, der Batteriezellen 1 in Vergussmasse 40 eingegossen. Figur 4 zeigt, dass die Temperiermittelleitungen 53,53' über Temperiermittelanschlüsse 53a,b,53a,b' außerhalb des Batteriesystemgehäuses 30 beziehungsweise außerhalb der Vergussmasse 40 anschließbar sind. Insbesondere sind die Temperiermittelleitungen 53,53' dabei durch, insbesondere einander gegenüberliegende, Seitenwände 30b,30b',60b,60b' des Batteriesystemgehäuses 30 beziehungsweise der Vergussform 60 hindurchgeführt.

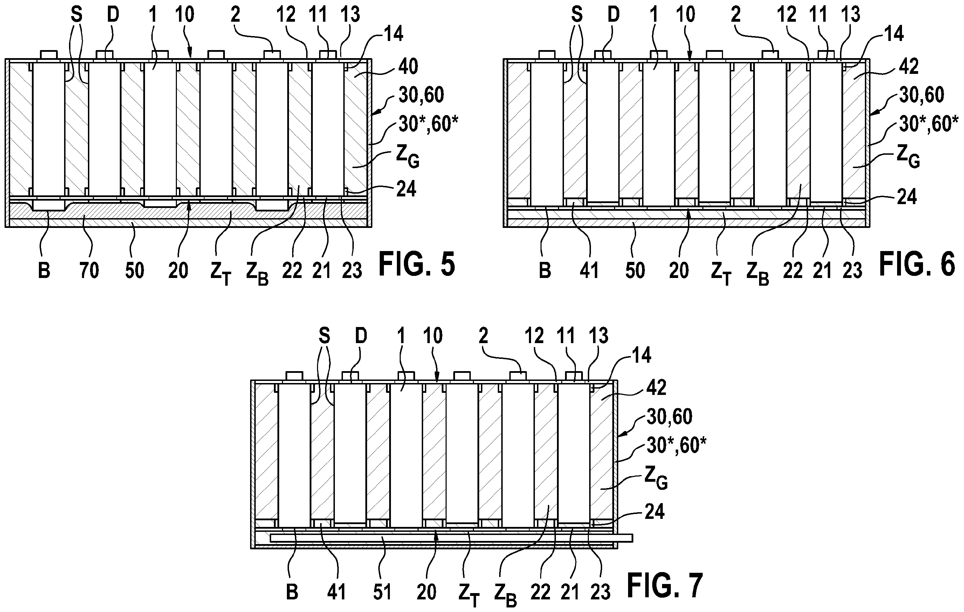

Die in Figur 5 gezeigte Ausführungsform unterscheidet sich im Wesentlichen dadurch von der in Figur 1 gezeigten Ausführungsform, dass in dem temperiermittelbeabstandenden Zwischenraum Z_{T} ein Halbzeug 70, beispielsweise eine Matte oder ein Kissen, zum Beispiel eine Elastomermatte oder ein Elastomerkissen, beispielsweise ein so genanntes GapPad, beispielsweise aus einem TIM-Material (Englisch: Thermal Interface Material), insbesondere zur thermischen Kontaktierung der Batteriezellen 1, angeordnet ist. Der mindestens eine batteriezellenbeabstandende Zwischenraums Z_{B} sowie der mindestens eine gehäusebeabstandenden Zwischenraum Z_{G} sind dabei jedoch ebenfalls mit einer lediglich einer Vergussmasse 40 (einfacher Verguss) gefüllt. Dabei ist der Innenraum des Batteriesystemgehäuses 30 beziehungsweise der Vergussform 60 mit der Vergussmasse 40 - insbesondere im Wesentlichen vollständig - aufgefüllt. Dabei kann das Halbzeug 70 insbesondere eine höhere Wärmeleitfähigkeit als die Vergussmasse 40 aufweisen und/oder die Vergussmasse 40 einen höheren elektrischen Widerstand als das Halbzeug 70 aufweisen.

Die in Figur 6 gezeigte Ausführungsform unterscheidet sich im Wesentlichen dadurch von der in Figur 1 gezeigten Ausführungsform, dass - insbesondere anstelle einer Vergussmasse 40 (einfacher Verguss) - eine erste Vergussmasse 41 und eine zweite Vergussmasse 42 (zweifacher Verguss, Zweiphasen-Verguss) eingesetzt ist, wobei die Boden bildende Temperiermittelplatte 50 und das untere Montagegitter 20 sowie die Bodenflächen B der Batteriezellen 1 mit der ersten Vergussmasse 41 vergossen sind und die Batteriezellen 1 im Übrigen, insbesondere Wesentlichen, zusammen mit dem oberen Montagegitter 10 mit der zweiten Vergussmasse 42 vergossen sind. Dabei ist der temperiermittelbeabstandende Zwischenraum Z_{T} mit der ersten Vergussmasse 41 gefüllt, wobei die batteriezellenbeabstandenden Zwischenräume Z_{B} sowie die gehäuse- oder vergussformbeabstandenden Zwischenräume Z_{G} im Wesentlichen mit der zweiten Vergussmasse 42 gefüllt sind. Dabei ist der Innenraum des Batteriesystemgehäuses 30 beziehungsweise der Vergussform 60 mit der zweiten Vergussmasse 42 - insbesondere im Wesentlichen vollständig - aufgefüllt. Dabei können die erste Vergussmasse 41 und die zweite Vergussmasse 42 insbesondere nass-in-nass vergossen sein. Die erste Vergussmasse 41 kann dabei insbesondere wärmeleitend und elektrisch isolierend sein. Beispielsweise kann die erste Vergussmasse 41 eine höhere Wärmeleitfähigkeit als die zweite Vergussmasse 42 und/oder die zweite Vergussmasse 42 einen höheren elektrischen Widerstand als die erste Vergussmasse 41 aufweisen.

Die in Figur 7 gezeigte Ausführungsform unterscheidet sich im Wesentlichen dadurch von der in Figur 2 gezeigten Ausführungsform, dass - insbesondere anstelle einer Vergussmasse 40 (einfacher Verguss) - eine erste Vergussmasse 41 und eine zweite Vergussmasse 42 (zweifacher Verguss, Zweiphasen-Verguss) eingesetzt ist, wobei die Temperiermittelleitung 51 und das untere Montagegitter 20 sowie die Bodenflächen B der Batteriezellen 1 mit der ersten Vergussmasse 41 vergossen sind und die Batteriezellen 1 im Übrigen, insbesondere Wesentlichen, zusammen mit dem oberen Montagegitter 10 mit der zweiten Vergussmasse 42 vergossen sind. Insbesondere ist dabei die Temperiermittelleitung 51 dabei unterhalb der Batteriezellen 1 in die erste Vergussmasse 41 eingegossen. Dabei ist - analog zu der in Figur 6 gezeigten Ausführungsform der temperiermittelbeabstandende Zwischenraum Z_{T} mit der ersten Vergussmasse 41 gefüllt, wobei die batteriezellenbeabstandenden Zwischenräume Z_{B} sowie die gehäuse- oder vergussformbeabstandenden Zwischenräume Z_{G} im Wesentlichen mit der zweiten Vergussmasse 42 gefüllt sind. Dabei ist der Innenraum des Batteriesystemgehäuses 30 beziehungsweise der Vergussform 60 mit der zweiten Vergussmasse 42 - insbesondere im Wesentlichen vollständig - aufgefüllt. Dabei können die erste Vergussmasse 41 und die zweite Vergussmasse 42 insbesondere nass-in-nass vergossen sein. Die erste Vergussmasse 41 kann dabei insbesondere wärmeleitend und elektrisch isolierend sein. Beispielsweise kann die erste Vergussmasse 41 eine höhere Wärmeleitfähigkeit als die zweite Vergussmasse 42 und/oder die zweite Vergussmasse 42 einen höheren elektrischen Widerstand als die erste Vergussmasse 41 aufweisen.

Die Figuren 8 bis 14 zeigen schematische Querschnitte durch mehrere Ausführungsformen eines erfindungsgemäßen Batteriesystems, in denen Batteriezellen 1 durch Positionsrippen und/oder Positionsvorsprünge 31a, 31b, 31c des Batteriesystemgehäuses 30 oder der Vergussform 60, welche zur Positionierung von Batteriezellen 1 ausgelegt sind, positioniert sind und zumindest teilweise mit mindestens einer Vergussmasse 40;41,42 vergossen sind. Dabei sind die Batteriezellen 1 durch die Positionsrippen und/oder Positionsvorsprünge 31a,31b,31c unter Ausbildung von batteriezellenbeabstandenden Zwischenräumen Z_{B} beabstandet zueinander und unter Ausbildung von gehäuse- oder vergussformbeabstandenden Zwischenräumen Z_{G} beabstandet zu dem Batteriesystemgehäuse 30 oder der Vergussform 60 und unter Ausbildung mindestens eines temperiermittelbeabstandenden Zwischenraums Z_{T} beabstandet zu einem Temperiermittel, beispielsweise einer Temperiermittelleitung 51,53,53' beziehungsweise einer Temperierplatte 50,52,52', angeordnet. Die Batteriezellen 1 und die Positionsrippen und/oder Positionsvorsprünge 31a,31b,31c sind dabei zumindest teilweise mit mindestens einer Vergussmasse 40;41,42 vergossen. Die Figuren 8 bis 14 zeigen, dass dabei die batteriezellenbeabstandenden Zwischenräume Z_{B}, die gehäuse- oder vergussformbeabstandenden Zwischenräume Z_{G} und die temperiermittelbeabstandende Zwischenräume Z_{T} mit mindestens einer Vergussmasse 40;41,42 gefüllt sind. Insbesondere zeigen die Figuren 8 bis 14, dass dabei die Batteriezellen 1 und die Positionsrippen und/oder Positionsvorsprünge 31a,31b,31c jeweils in einem Innenraum eines Batteriesystemgehäuses 30 oder einer Vergussform 60 angeordnet sind, welcher mit der mindestens einen Vergussmasse 40;41,42 gefüllt, beispielsweise - insbesondere im Wesentlichen vollständig - aufgefüllt, ist.

Die Figuren 8 bis 14 deuten zudem an, dass die Positionsrippen und/oder Positionsvorsprünge 31a, 31b, 31c als, insbesondere laterale und/oder vertikale, Anschläge für die Batteriezellen 1 und insbesondere auch zur Beabstandung von benachbarten Batteriezellen 1 und/oder zur Beabstandung der Batteriezellen 1 von dem Batteriesystemgehäuse 30 oder der Vergussform 60, insbesondere vom Boden und/oder mindestens einer Seitenwand des Batteriesystemgehäuses 30 oder der Vergussform 60, und/oder zur Beabstandung der Batteriezellen 1 von einem Temperiermittel, insbesondere mindestens einer Temperiermittelleitung und/oder Temperierplatte, 50,51,52,53, dienen.

Die Figuren 8 bis 14 zeigen, dass sich die Positionsrippen und/oder Positionsvorsprünge 31a zur Beabstandung von benachbarten Batteriezellen 1 und/oder die Positionsrippen und/oder Positionsvorsprünge 31b zur Beabstandung der Batteriezellen 1 von dem Batteriesystemgehäuse 30 beziehungsweise der Vergussform 60, und/oder die Positionsrippen und/oder Positionsvorsprünge 31c zur Beabstandung der Batteriezellen 1 von dem Temperiermittel, insbesondere der mindestens einen Temperiermittelleitung und/oder Temperierplatte, 50,51,52,53 beispielsweise ausgehend von einer Bestückungsöffnung des Batteriesystemgehäuses 30 beziehungsweise der Vergussform 60, längs einer Bestückungsrichtung X, beispielsweise vertikal, erstrecken können. Die Positionsrippen und/oder Positionsvorsprünge 31c zur Beabstandung der Batteriezellen 1 von dem Temperiermittel, insbesondere der mindestens einen Temperiermittelleitung und/oder Temperierplatte, 50,51,52,53 können sich dabei, insbesondere ausgehend von einer mit dem Temperiermittel 50,51,52,53 zu bestückenden Fläche, zumindest in den Innenraum des Batteriesystemgehäuses 30 oder der Vergussform 60 hinein erstrecken.

Die in Figur 8 gezeigte Ausführungsform unterscheidet sich im Wesentlichen dadurch von der in Figur 1 gezeigten Ausführungsform, dass die Batteriezellen 1 - insbesondere anstatt durch Montagegitter 10,20 - durch Positionsrippen und/oder Positionsvorsprünge 31a,31b,31c des Batteriesystemgehäuses 30 oder der Vergussform 60 positioniert sind. Die Positionsrippen 31a zur Beabstandung von benachbarten Batteriezellen 1 und die Positionsrippen 31b zur Beabstandung der Batteriezellen 1 von dem Batteriesystemgehäuse 30 oder der Vergussform 60 können dabei insbesondere an dem Grundkörper 30*,60*, beispielsweise in Form eines Rahmens, des Batteriesystemgehäuses 30 beziehungsweise der Vergussform 60 ausgebildet sein. Die Positionsrippen und/oder Positionsvorsprünge 31c zur Beabstandung der Batteriezellen 1 von dem Temperiermittel 50 können dabei an der, den Innenraum des Batteriesystemgehäuses 30 beziehungsweise der Vergussform 60 begrenzenden, als Boden des Batteriesystemgehäuses 30 beziehungsweise der Vergussform 60 dienenden Temperierplatte 50, zum Beispiel einer kühlbaren Bodenplatte, und/oder ebenfalls an dem Grundkörper 30*,60* des Batteriesystemgehäuses 30 beziehungsweise der Vergussform 60 ausgebildet sein.

Die in Figur 9 gezeigte Ausführungsform unterscheidet sich im Wesentlichen dadurch von der in Figur 2 gezeigten Ausführungsform, dass die Batteriezellen 1 - insbesondere anstatt durch Montagegitter 10,20 - durch Positionsrippen und/oder Positionsvorsprünge 31a,31b,31c des Batteriesystemgehäuses 30 oder der Vergussform 60 positioniert sind. Die Positionsrippen 31a zur Beabstandung von benachbarten Batteriezellen 1 und die Positionsrippen 31b zur Beabstandung der Batteriezellen 1 von dem Batteriesystemgehäuse 30 oder der Vergussform 60 können dabei an Seitenwänden 30b,60b des Batteriesystemgehäuses 30 beziehungsweise der Vergussform 60 ausgebildet sein. Die Positionsrippen und/oder Positionsvorsprünge 31c zur Beabstandung der Batteriezellen 1 von dem Temperiermittel 51 können dabei am Boden 30a,60a und/oder ebenfalls an Seitenwänden 30b,60b des Batteriesystemgehäuses 30 beziehungsweise der Vergussform 60 ausgebildet sein.

Die in Figur 10 gezeigte Ausführungsform unterscheidet sich im Wesentlichen dadurch von der in Figur 3 gezeigten Ausführungsform, dass die Batteriezellen 1 - insbesondere anstatt durch die Montagegitter 10,20 - durch die Positionsrippen und/oder Positionsvorsprünge 31a,31b,31c des Batteriesystemgehäuses 30 oder der Vergussform 60 positioniert sind. Die Positionsrippen 31a zur Beabstandung von benachbarten Batteriezellen 1 und die Positionsrippen und/oder Positionsvorsprünge 31c zur Beabstandung der Batteriezellen 1 von dem Temperiermittel 53,53' können dabei insbesondere den, insbesondere einander gegenüberliegenden, Seitenwände des Batteriesystemgehäuses 30 beziehungsweise der Vergussform 60 bildenden Temperierplatten 52,52' ausgebildet sein. Die Positionsrippen 31b zur Beabstandung der Batteriezellen 1 von dem Batteriesystemgehäuse 30 oder der Vergussform 60 können dabei ebenfalls an den Seitenwänden bildenden Temperierplatten 52,52' und/oder am Grundkörper 30*,60*, beispielsweise in Form einer Platte, des Batteriesystemgehäuses 30 beziehungsweise der Vergussform 60, ausgebildet sein.

Die in Figur 11 gezeigte Ausführungsform unterscheidet sich im Wesentlichen dadurch von der in Figur 4 gezeigten Ausführungsform, dass die Batteriezellen 1 - insbesondere anstatt durch Montagegitter 10,20 - durch Positionsrippen und/oder Positionsvorsprünge 31a,31b,31c des Batteriesystemgehäuses 30 oder der Vergussform 60 positioniert sind. Die Positionsrippen 31a zur Beabstandung von benachbarten Batteriezellen 1 und die Positionsrippen und/oder Positionsvorsprünge 31c zur Beabstandung der Batteriezellen 1 von dem Temperiermittel 53,53' können dabei insbesondere an Seitenwänden 30b,30b',60b,60b' des Batteriesystemgehäuses 30 beziehungsweise der Vergussform 60 ausgebildet sein. Die Positionsrippen 31b zur Beabstandung der Batteriezellen 1 von dem Batteriesystemgehäuse 30 oder der Vergussform 60 können dabei ebenfalls an Seitenwänden 30b,30b',60b,60b' und/oder am Boden 30a,60a des Batteriesystemgehäuses 30 beziehungsweise der Vergussform 60 ausgebildet sein.

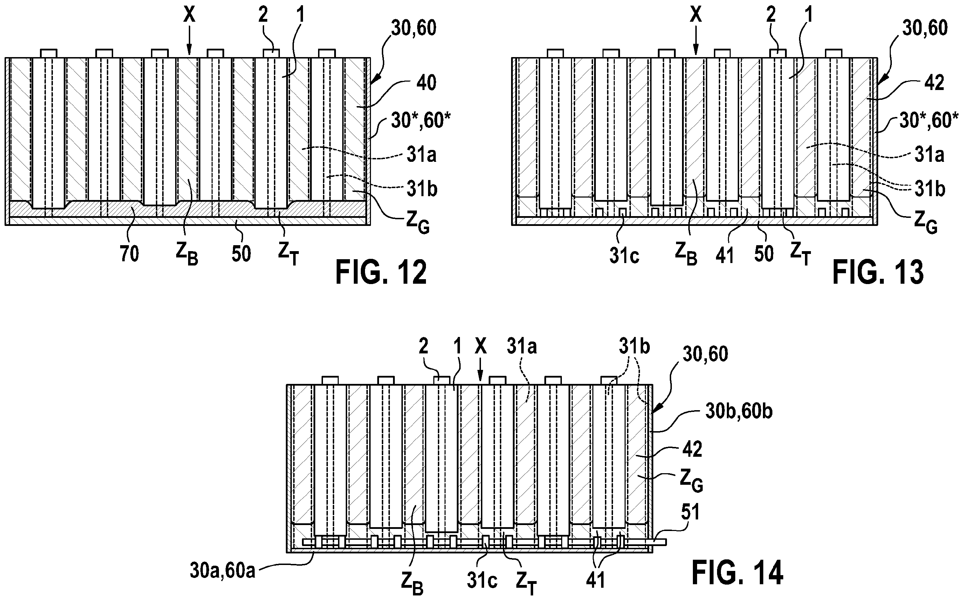

Die in Figur 12 gezeigte Ausführungsform unterscheidet sich im Wesentlichen dadurch von der in Figur 5 gezeigten Ausführungsform, dass die Batteriezellen 1 - insbesondere anstatt durch Montagegitter 10,20 - durch Positionsrippen und/oder Positionsvorsprünge 31a,31b,31c des Batteriesystemgehäuses 30 oder der Vergussform 60 positioniert sind. Die Positionsrippen 31a zur Beabstandung von benachbarten Batteriezellen 1 und die Positionsrippen 31b zur Beabstandung der Batteriezellen 1 von dem Batteriesystemgehäuse 30 oder der Vergussform 60 können dabei insbesondere an dem Grundkörper 30*,60*, beispielsweise in Form eines Rahmens, des Batteriesystemgehäuses 30 beziehungsweise der Vergussform 60 ausgebildet sein. Auf die Positionsrippen und/oder Positionsvorsprünge 31c zur Beabstandung der Batteriezellen 1 von dem Temperiermittel 53,53' kann dabei gegebenenfalls verzichtet werden, da deren Funktion das Halbzeug 70 zumindest teilweise übernehmen kann.

Die in Figur 13 gezeigte Ausführungsform unterscheidet sich im Wesentlichen dadurch von der in Figur 8 gezeigten Ausführungsform, dass - insbesondere anstelle einer Vergussmasse 40 (einfacher Verguss) - eine erste Vergussmasse 41 und eine zweite Vergussmasse 42 (zweifacher Verguss, Zweiphasen-Verguss) eingesetzt ist, wobei die Boden bildende Temperiermittelplatte 50 mit der ersten Vergussmasse 41 vergossen ist und die Batteriezellen 1 mit der zweiten Vergussmasse 42 vergossen sind. Dabei ist der temperiermittelbeabstandende Zwischenraum Z_{T} mit der ersten Vergussmasse 41 gefüllt, wobei die batteriezellenbeabstandenden Zwischenräume Z_{B} sowie die gehäuse- oder vergussformbeabstandenden Zwischenräume Z_{G} im Wesentlichen mit der zweiten Vergussmasse 42 gefüllt sind. Dabei ist der Innenraum des Batteriesystemgehäuses 30 beziehungsweise der Vergussform 60 mit der zweiten Vergussmasse 42 - insbesondere im Wesentlichen vollständig - aufgefüllt. Dabei können die erste Vergussmasse 41 und die zweite Vergussmasse 42 insbesondere nass-in-nass vergossen sein. Die erste Vergussmasse 41 kann dabei insbesondere wärmeleitend und elektrisch isolierend sein. Beispielsweise kann die erste Vergussmasse 41 eine höhere Wärmeleitfähigkeit als die zweite Vergussmasse 42 und/oder die zweite Vergussmasse 42 einen höheren elektrischen Widerstand als die erste Vergussmasse 41 aufweisen.

Die in Figur 14 gezeigte Ausführungsform unterscheidet sich im Wesentlichen dadurch von der in Figur 9 gezeigten Ausführungsform, dass - insbesondere anstelle einer Vergussmasse 40 (einfacher Verguss) - eine erste Vergussmasse 41 und eine zweite Vergussmasse 42 (zweifacher Verguss, Zweiphasen-Verguss) eingesetzt ist, wobei die Temperiermittelleitung 51 mit der ersten Vergussmasse 41 vergossen ist und die Batteriezellen 1 mit der zweiten Vergussmasse 42 vergossen sind. Insbesondere ist dabei die Temperiermittelleitung 51 unterhalb der Batteriezellen 1 in die erste Vergussmasse 41 eingegossen. Dabei ist - analog zu der in Figur 13 gezeigten Ausführungsform der temperiermittelbeabstandende Zwischenraum Z_{T} mit der ersten Vergussmasse 41 gefüllt, wobei die batteriezellenbeabstandenden Zwischenräume Z_{B} sowie die gehäuse- oder vergussformbeabstandenden Zwischenräume Z_{G} im Wesentlichen mit der zweiten Vergussmasse 42 gefüllt sind. Dabei ist der Innenraum des Batteriesystemgehäuses 30 beziehungsweise der Vergussform 60 mit der zweiten Vergussmasse 42 - insbesondere im Wesentlichen vollständig - aufgefüllt. Dabei können die erste Vergussmasse 41 und die zweite Vergussmasse 42 insbesondere nass-in-nass vergossen sein. Die erste Vergussmasse 41 kann dabei insbesondere wärmeleitend und elektrisch isolierend sein. Beispielsweise kann die erste Vergussmasse 41 eine höhere Wärmeleitfähigkeit als die zweite Vergussmasse 42 und/oder die zweite Vergussmasse 42 einen höheren elektrischen Widerstand als die erste Vergussmasse 41 aufweisen.

Die Figuren 15 bis 21 zeigen schematische Querschnitte durch mehrere Ausführungsformen eines erfindungsgemäßen Batteriesystems, in denen Batteriezellen 1 durch einen Montagegreifer (nicht dargestellt) zur Positionierung von Batteriezellen 1 positioniert werden und zumindest teilweise mit mindestens einer Vergussmasse 40;41,42 vergossen sind. Dabei wurden die Batteriezellen 1 durch den Montagegreifer unter Ausbildung von batteriezellenbeabstandenden Zwischenräumen Z_{B} beabstandet zueinander und unter Ausbildung von gehäuse- oder vergussformbeabstandenden Zwischenräumen Z_{G} beabstandet zu dem Batteriesystemgehäuse 30 oder der Vergussform 60 und unter Ausbildung mindestens eines temperiermittelbeabstandenden Zwischenraums Z_{T} beabstandet zu einem Temperiermittel, beispielsweise einer Temperiermittelleitung 51,53,53' beziehungsweise einer Temperierplatte 50,52,52', angeordnet. Die Batteriezellen 1 sind dabei zumindest teilweise mit mindestens einer Vergussmasse 40;41,42 vergossen. Die Figuren 15 bis 21 zeigen, dass dabei die batteriezellenbeabstandenden Zwischenräume Z_{B}, die gehäuse- oder vergussformbeabstandenden Zwischenräume Z_{G} und die temperiermittelbeabstandende Zwischenräume Z_{T} mit mindestens einer Vergussmasse 40;41,42 gefüllt sind. Insbesondere zeigen die Figuren 15 bis 21, dass dabei die Batteriezellen 1 jeweils in einem Innenraum eines Batteriesystemgehäuses 30 oder einer Vergussform 60 angeordnet sind, welcher mit der mindestens einen Vergussmasse 40;41,42 gefüllt, beispielsweise - insbesondere im Wesentlichen vollständig - aufgefüllt, ist.

Die in den Figuren 15 bis 21 gezeigten Ausführungsform unterscheiden sich jeweils im Wesentlichen dadurch von den in den Figuren 1, 2, 3, 4, 5, 6 beziehungsweise 7 gezeigten Ausführungsformen, dass die Batteriezellen 1 - insbesondere anstatt durch Montagegitter 10,20 - durch einen Montagegreifer positioniert werden und somit die darin gezeigten Batteriesysteme keine Montagegitter 10,20 aufweisen.

Figur 22 zeigt eine schematische, perspektivische Ansicht zur Veranschaulichung einer Ausführungsform eines erfindungsgemäßen Batteriesystems und/oder Herstellungsverfahrens, in der Batteriezellen 1 in ein oberes Montagegitter 10 zur Positionierung von Batteriezellen 1 und in ein unteres Montagegitter 20 zur Positionierung von Batteriezellen 1 eingesteckt werden beziehungsweise sind.

Figur 22 zeigt, dass das obere Montagegitter 10 Gitteröffnungen 11 aufweist, in welche jeweils eine Batteriezelle 1 eingesteckt ist. Dabei sind die Batteriezellen 1 jeweils umfänglich von gitteröffnungsbildenden Gitterstegen 12 umgeben. Die Gitteröffnungen 11 des oberen Montagegitters 10 sind derart ausgestaltet, dass darin die Pole 2 und die Sicherheitsventile 3 offen liegen.

Dabei weisen das obere Montagegitter 10 und das untere Montagegitter 20 vertikale 13 und/oder laterale 14,24 Anschlagsabschnitte auf, welche als Anschlag für die Batteriezellen 1 und insbesondere auch zur Beabstandung von benachbarten Batteriezellen 1 und/oder zur Beabstandung der Batteriezellen 1 von einem Batteriesystemgehäuse oder einer Vergussform und/oder zur Beabstandung der Batteriezellen 1 von einem Temperiermittel dienen.

Im Rahmen der in Figur 22 gezeigten Ausführungsform sind die vertikalen 13 und lateralen 14,24 Anschlagsabschnitte des oberen 10 und unteren 20 Montagegitters in Form von Rahmen 13,14,24, welche sich jeweils ausgehend von gitteröffnungsbildenden Gitterstegen 12,22 umlaufend, lateral 13 über die Gitteröffnungen 11 beziehungsweise vertikal 14,24 und insbesondere umlaufend um die Batteriezellen 1 erstrecken, ausgebildet. Dabei können die rahmenartigen Anschlagsabschnitte 13,14,24, insbesondere breite, Randabschnitte der Deckflächen D und/oder der Seitenflächen S und/oder der Bodenflächen der Batteriezellen 1 und beispielsweise einen Wesentlichen Teil der Deckfläche D beziehungsweise der Bodenfläche der Batteriezellen 1 bedecken. Derartige Montagegitter 10,20 können daher insbesondere auch als Montageschalen bezeichnet werden.

Die in Figur 23 gezeigte Ausführungsform unterscheidet sich im Wesentlichen dadurch von der in Figur 22 gezeigten Ausführungsform, dass das obere 10 und/oder untere 20 Montagegitter, zum Beispiel die obere 10 und/oder untere 20 Montageschale, zusätzliche Distanzabschnitte 15 zur Beabstandung von benachbarten Batteriezellen 1, beispielsweise in Form von Stegen, aufweist, welche 15 sich ausgehend von einem gitteröffnungsbildenden Gittersteg 12, insbesondere ausgehend von einer Ecke oder einem T-Stück zwischen mehreren gitteröffnungsbildenden Gitterstegen 12, vertikal erstrecken.

Die in Figur 24 gezeigte Ausführungsform unterscheidet sich im Wesentlichen dadurch von der in Figur 22 gezeigten Ausführungsform, dass das obere 10 und/oder untere 20 Montagegitter vertikale 13a,13b und laterale 14,24 Anschlagsabschnitte in Form von Laschen 13a,24, insbesondere welche sich ausgehend von einem gitteröffnungsbildenden Gittersteg 12,22 lateral 13a über eine Gitteröffnung 11 beziehungsweise vertikal 14,24 erstrecken und/oder in Form von Eckplateaus 13b, insbesondere welche sich über einen Eckabschnitt zwischen einer von zwei gitteröffnungsbildenden Gitterstegen 12 ausgebildeten Ecke erstrecken, aufweist. Figur 24 illustriert, dass dabei die laschenförmigen und eckplateauförmigen Anschlagsabschnitte 13a,13b,14,24 des oberen Montagegitters 10 lediglich, insbesondere geringe, Flächeninhalte der Randabschnitte der Deckflächen D und/oder der Seitenflächen S der Batteriezellen 1 bedecken und beispielsweise die Deckflächen D der Batteriezellen 1 in den Gitteröffnungen 11 im Wesentlichen offen liegt. So kann vorteilhafterweise die elektrische Kontaktierung der Batteriezellen vereinfacht werden.

Figur 25 zeigt die in Figur 24 gezeigte Ausführungsform von unten und veranschaulicht, dass auch das untere Montagegitter Gitteröffnungen 21 aufweist, in welche jeweils eine Batteriezelle 1 eingesteckt ist. Dabei sind die Batteriezellen 1 jeweils umfänglich von gitteröffnungsbildenden Gitterstegen 22 umgeben. Dabei weist das untere Montagegitter 20 vertikale 23 und laterale 24 Anschlagsabschnitte auf, welche als Anschlag für die Batteriezellen 1 und insbesondere auch zur Beabstandung der Batteriezellen 1 von einem Batteriesystemgehäuse oder einer Vergussform und/oder zur Beabstandung der Batteriezellen 1 von einem Temperiermittel dienen. Dabei sind die vertikalen Anschlagsabschnitte 23 des unteren Montagegitters 20 in Form von Querstreben 23, insbesondere welche sich zwischen zwei gitteröffnungsbildenden Gitterstegen 22 erstrecken und die Gitteröffnungen 21 des unteren Montagegitters 20 unten begrenzen, und die lateralen Anschlagsabschnitte 24 des unteren Montagegitters 20 in Form von Laschen 24, insbesondere welche sich ausgehend von einem gitteröffnungsbildenden Gittersteg 22 vertikal erstrecken, ausgebildet. Zusätzlich weist das untere Montagegitter 20 Distanzabschnitte 23a zur Beabstandung der Batteriezellen 1 von einem Batteriesystemgehäuse oder von einer Vergussform oder von einem Temperiermittel in Form von an den Querstreben 23 ausgebildeten, nach Außen erstreckenden Vorsprüngen 23a auf. Figur 25 illustriert, dass dabei die laschenförmigen und querstrebenförmigen Anschlagsabschnitte 23,24 sowie die vorsprungförmigen Distanzabschnitte 23a des unteren Montagegitters 20 lediglich, insbesondere geringe, Flächeninhalte der Bodenflächen B der Batteriezellen 1 bedecken und beispielsweise die Bodenflächen B der Batteriezellen 1 in den Gitteröffnungen 21 im Wesentlichen offen liegt. So kann vorteilhafterweise eine gute Wärmeableitung über eine an die Bodenfläche B der Batteriezellen 1 angegossene Vergussmasse erzielt werden.

Die in Figur 26 gezeigte Ausführungsform unterscheidet sich im Wesentlichen dadurch von der in Figur 24 und 25 gezeigten Ausführungsform, dass das obere 10 und/oder untere 20 Montagegitter zusätzliche Distanzabschnitte 15 zur Beabstandung von benachbarten Batteriezellen 1, beispielsweise in Form von Stegen, aufweist, welche 15 sich ausgehend von einem gitteröffnungsbildenden Gittersteg 12,22 insbesondere ausgehend von einer Ecke oder einem T-Stück zwischen mehreren gitteröffnungsbildenden Gitterstegen 12,22 vertikal erstrecken.

Figur 27 zeigt eine schematische, perspektivische Ansicht einer weiteren Ausführungsform eines erfindungsgemäßen Batteriesystems, welches durch Einbringen einer in den Figuren 24 bis 26 gezeigten Montagegitter-Batteriezellen-Anordnung 10,20,1 in den Innenraum eines, beispielsweise metallischen, Batteriesystemgehäuses 30 mit mindestens einem Montagemittel 32, beispielsweise in Form von Montagewinkeln, zur Montage an einer Haltevorrichtung, beispielsweise einer Halteplatte oder einem Halterahmen, zum Beispiel eines Fahrzeugs, wie eines Elektro- und/oder Hybridfahrzeugs, und/oder an einer Temperierplatte und durch zumindest teilweises Füllen, beispielsweise Auffüllen, des Innenraums des Batteriesystemgehäuses 30 mit mindestens einer Vergussmasse 40;41,42 herstellbar ist und in dem Batteriezellen 1, mindestens ein Montagegitter 10,20 sowie das Batteriesystemgehäuse 30 zumindest teilweise mit mindestens einer Vergussmasse 40;41,42 vergossen sind.

Die Figuren 28a und 28b zeigen schematische, perspektivische Ansichten einer weiteren Ausführungsform eines erfindungsgemäßen Batteriesystems, welches durch Einbringen einer in den Figuren 24 bis 26 gezeigten Montagegitter-Batteriezellen-Anordnung 10,20,1 in den Innenraum eines, beispielsweise metallischen, Batteriesystemgehäuses 30 aus einem Grundkörper 30* in Form eines Rahmens und einer daran befestigten, den Innenraum des Batteriesystemgehäuses 30 begrenzenden, als Boden des Batteriesystemgehäuses 30 dienenden Temperierplatte 50, und durch zumindest teilweises Füllen, beispielsweise Auffüllen, des Innenraums des Batteriesystemgehäuses 30 mit mindestens einer Vergussmasse 40;41,42 herstellbar ist und in dem Batteriezellen 1, mindestens ein Montagegitter 10 das Batteriesystemgehäuse 30, insbesondere die Temperierplatte 50 und der Grundkörper 30*, zumindest teilweise mit mindestens einer Vergussmasse 40;41,42 vergossen sind. Die Figuren 28a und 28b zeigen weiterhin, dass die Temperierplatte 50 über Temperiermittelanschlüsse 50a,b außerhalb des Batteriesystemgehäuses 30 anschließbar ist.

Die Figuren 29a und 29b zeigen schematische, perspektivische Ansichten einer weiteren Ausführungsform eines erfindungsgemäßen Batteriesystems, welches durch Einbringen einer in den Figuren 22 und 23 gezeigten Montagegitter-Batteriezellen-Anordnung 10,20,1 in den Innenraum eines, beispielsweise metallischen, Batteriesystemgehäuses 30 mit einer, an dessen inneren Bodenfläche 30a befestigten, insbesondere W-förmigen, Temperiermittelleitung 51, zum Beispiel in Form eines W-Mäanders, sowie mit mindestens einem Montagemittel 32, beispielsweise einer Montageplatte, zur Montage an einer Haltevorrichtung, beispielsweise einer Halteplatte oder einem Halterahmen, zum Beispiel eines Fahrzeugs, wie eines Elektro- und/oder Hybridfahrzeugs, und durch zumindest teilweises Füllen, beispielsweise Auffüllen, des Innenraums des Batteriesystemgehäuses 30 mit mindestens einer Vergussmasse 40;41,42 herstellbar ist und in dem die Batteriezellen 1, mindestens ein Montagegitter 10, die Temperiermittelleitung 51 sowie das Batteriesystemgehäuse 30 zumindest teilweise mit mindestens einer Vergussmasse 40;41,42 vergossen sind. Die Figuren 29a und 29b zeigen weiterhin, dass die Temperiermittelleitung 51 über Temperiermittelanschlüsse 51a,b außerhalb des Batteriesystemgehäuses 30 anschließbar ist, wobei die Temperiermittelleitung 51 durch eine Seitenwand 30b des Batteriesystemgehäuses 30 hindurchgeführt ist.

Die Figuren 30a und 30b zeigen schematische, perspektivische Ansichten einer weiteren Ausführungsform eines erfindungsgemäßen Batteriesystems, welches durch Einbringen einer in den Figuren 24 bis 26 gezeigten Montagegitter-Batteriezellen-Anordnung 10,20,1 in den Innenraum eines, beispielsweise metallischen, Batteriesystemgehäuses 30 und durch zumindest teilweises Füllen, beispielsweise Auffüllen, des Innenraums mit mindestens einer Vergussmasse 40;41,42 herstellbar ist, wobei das Batteriesystemgehäuse 30 eine, an dessen inneren Bodenfläche 30a befestigte, insbesondere U-förmige, Temperiermittelleitung 51 sowie mindestens ein Montagemittel 32, beispielsweise eine Montageplatte aufweist. Dabei sind die Batteriezellen 1, das mindestens eine Montagegitter 10, die Temperiermittelleitung 51 sowie das Batteriesystemgehäuse 30 zumindest teilweise mit mindestens einer Vergussmasse 40;41,42 vergossen. Die Figuren 30a und 30b zeigen weiterhin, dass die Temperiermittelleitung 51 über Temperiermittelanschlüsse 51a,b außerhalb des Batteriesystemgehäuses 30 anschließbar ist, wobei die Temperiermittelleitung 51 durch eine Seitenwand 30b des Batteriesystemgehäuses 30 hindurchgeführt ist.

Figur 31 zeigt eine schematische, perspektivische Ansicht zur Veranschaulichung einer Ausführungsform eines erfindungsgemäßen Batteriesystems und/oder Herstellungsverfahrens, in der Batteriezellen 1 in ein Batteriesystemgehäuse 30, beispielsweise aus Kunststoff, mit Positionsrippen 31a,31b und/oder Positionsvorsprüngen 31c zur Positionierung von Batteriezellen 1 sowie mit mindestens einem Montagemittel 32, beispielsweise Montagelaschen, zur Montage an einer Haltevorrichtung, beispielsweise einer Halteplatte oder einem Halterahmen, zum Beispiel eines Fahrzeugs, wie eines Elektro- und/oder Hybridfahrzeugs, und/oder an einer Temperierplatte, eingesteckt werden beziehungsweise sind.

Die Figuren 32a und 32b zeigen schematische, perspektivische Ansichten einer weiteren Ausführungsform eines erfindungsgemäßen Batteriesystems, welches durch Einstecken von Batteriezellen 1 in ein Batteriesystemgehäuse 30, beispielsweise aus Kunststoff, und durch zumindest teilweises Füllen, beispielsweise Auffüllen, des Innenraums des Batteriesystemgehäuses 30 mit mindestens einer Vergussmasse 40;41,42 herstellbar ist, wobei das Batteriesystemgehäuse 30 Positionsrippen 31a,31b und/oder Positionsvorsprüngen 31c, einen rahmenförmigen Grundkörper 30* und eine daran befestigte, als Boden dienende Temperierplatte 50 sowie mindestens ein Montagemittel 32, beispielsweise Montagelaschen, zur Montage an einer Haltevorrichtung, beispielsweise einer Halteplatte oder einem Halterahmen, zum Beispiel eines Fahrzeugs, wie eines Elektro- und/oder Hybridfahrzeugs, aufweist. Dabei sind die Batteriezellen 1 und das Batteriesystemgehäuse 30, insbesondere die Temperierplatte 50 und der Grundkörper 30*, zumindest teilweise mit mindestens einer Vergussmasse 40;41,42 vergossen. Die Figuren 32a und 32b zeigen weiterhin, dass die Temperierplatte 50 über Temperiermittelanschlüsse 50a,b außerhalb des Batteriesystemgehäuses 30 anschließbar ist.

Die Figuren 33a und 33b zeigen schematische, perspektivische Ansichten einer weiteren Ausführungsform eines erfindungsgemäßen Batteriesystems, welches durch Einstecken von Batteriezellen 1 in ein Batteriesystemgehäuse 30, beispielsweise aus Kunststoff, und durch zumindest teilweises Füllen, beispielsweise Auffüllen, des Innenraums des Batteriesystemgehäuses 30 mit mindestens einer Vergussmasse 40;41,42 herstellbar ist, wobei das Batteriesystemgehäuse 30 Positionsrippen 31a,31b und/oder Positionsvorsprünge 31c und eine an dessen innerer Bodenfläche befestigte, insbesondere U-förmige, Temperiermittelleitung 51, zum Beispiel in Form eines U-Mäanders, sowie mindestens ein Montagemittel 32, beispielsweise Montagelaschen, zur Montage an einer Haltevorrichtung, beispielsweise einer Halteplatte oder einem Halterahmen, zum Beispiel eines Fahrzeugs, wie eines Elektro- und/oder Hybridfahrzeugs, aufweist. Dabei sind die Batteriezellen 1, die Temperiermittelleitung 51 und das Batteriesystemgehäuse 30 zumindest teilweise mit mindestens einer Vergussmasse 40;41,42 vergossen. Die Figuren 33a und 33b zeigen weiterhin, dass die Temperiermittelleitung 51 über Temperiermittelanschlüsse 51a,b außerhalb des Batteriesystemgehäuses 30 anschließbar ist, wobei die Temperiermittelleitung 51 durch eine Seitenwand 30b des Batteriesystemgehäuses 30 hindurchgeführt ist.

Figur 34 zeigt eine schematische, perspektivische Ansicht zur Veranschaulichung einer weiteren Ausführungsform eines erfindungsgemäßen Batteriesystems und/oder Herstellungsverfahrens mit einem Batteriesystemgehäuse 30 aus einem Grundkörper 30* und zwei, an gegenüberliegenden Seiten daran 30* befestigten, als Seitenwände dienenden Temperierplatten 52,52', in dem Batteriezellen 1 und das Batteriesystemgehäuse 30, insbesondere die Temperierplatten 52,52' und der Grundkörper 30*, zumindest teilweise mit mindestens einer Vergussmasse vergossen sind.

Die Figuren 35a und 35b zeigen schematische Querschnitte zur Veranschaulichung einer weiteren Ausführungsform eines erfindungsgemäßen Batteriesystems und/oder Herstellungsverfahrens mit einem Batteriesystemgehäuse 30 mit zwei, an Innenflächen gegenüberliegender Seitenwände 30b,30b' des Batteriesystemgehäuses 30 befestigten Temperiermitteleitungen 53,53', in dem Batteriezellen 1 und die Temperiermittelleitungen 53,53' und das Batteriesystemgehäuse 30 zumindest teilweise mit einer Vergussmasse 40;41,42 vergossen sind. Die Figuren 35a und 35b deuten weiterhin an, dass die Temperiermittelleitungen 53,53' teilweise in das Material jeweils einer Seitenwand 30b,30b' des Batteriesystemgehäuses 30 eingebettet, beispielsweise darin eingeklemmt oder daran angegossen, sind.

## Patentansprüche

1. Verfahren zur Herstellung eines Batteriesystems, in dem Batteriezellen (1)
- durch mindestens ein Montagegitter (10,20) zur Positionierung von Batteriezellen (1) und/oder durch Positionsrippen und/oder Positionsvorsprünge (31a,31b,31c) im Innenraum eines Batteriesystemgehäuses (30) oder einer Vergussform (60), welche (31a,31b,31c) zur Positionierung von Batteriezellen (1) ausgelegt sind, und/oder durch einen Montagegreifer zur Positionierung von Batteriezellen (1) positioniert und
- zumindest teilweise mit mindestens einer Vergussmasse (40;41,42) vergossen werden, **dadurch gekennzeichnet, dass** die mindestens eine Vergussmasse
(40;41,42)
- mindestens ein Epoxidharz auf Basis von Bisphenol A und/oder Bisphenol F,
- eine Bisphenol-A- und/oder -F-Epoxid, insbesondere Bisphenol-A-Epoxid, basierte Formulierung mit Silikonelastomerpartikeln, und
- mindestens einen Aminhärter umfasst,
wobei in der Formulierung Epoxid-Einheiten chemisch mit Silikon-Einheiten, insbesondere welche die Silikonelastomerpartikel bilden, verbunden sind, wobei die Formulierung Silikonelastomerpartikel umfasst, deren Inneres durch Silikon-Einheiten und deren Äußeres durch Epoxid-Einheiten ausgebildet ist.

2. Verfahren nach Anspruch 1, wobei die Batteriezellen (1) in den Innenraum eines beziehungsweise des Batteriesystemgehäuses (30) oder einer beziehungsweise der Vergussform (60) eingebracht werden und/oder der Innenraum des Batteriesystemgehäuses (30) beziehungsweise der Vergussform (60) zumindest teilweise mit mindestens einer Vergussmasse gefüllt wird.

3. Verfahren nach Anspruch 1 oder 2, wobei die Batteriezellen (1) durch das mindestens eine Montagegitter (10,20) und/oder durch die Positionsrippen und/oder Positionsvorsprünge (31a,31b,31c) und/oder durch den Montagegreifer unter Ausbildung mindestens eines batteriezellenbeabstandenden Zwischenraums (Z_{B}) beabstandet zueinander und/oder unter Ausbildung mindestens eines gehäuse- oder vergussformbeabstandenden Zwischenraums (Z_{G}) beabstandet zu einem beziehungsweise dem Batteriesystemgehäuse (30) beziehungsweise zu einer beziehungsweise der Vergussform (60) und/oder unter Ausbildung mindestens eines temperiermittelbeabstandenden Zwischenraums (Z_{T}) beabstandet zu einem Temperiermittel (50,51,52,52',53,53') positioniert werden, wobei der mindestens eine batteriezellenbeabstandende Zwischenraum (Z_{B}) und/oder der mindestens eines gehäuse- oder vergussformbeabstandende Zwischenraum (Z_{G}) und/oder der mindestens eine temperiermittelbeabstandende Zwischenraum (Z_{T}), insbesondere nach dem Einbringen und Positionieren der Batteriezellen (1), mit mindestens einer Vergussmasse (40;41,42) gefüllt wird.

4. Verfahren nach einem der Ansprüche 1 bis 3,
wobei die Batteriezellen (1) in das mindestens eine Montagegitter (10,20), insbesondere in ein oberes Montagegitter (10) zur Positionierung von Batteriezellen (1) und in ein unteres Montagegitter (20) zur Positionierung von Batteriezellen (1), eingesteckt werden, insbesondere wobei eine Montagegitter-Batteriezellen-Anordnung (10,20,1) durch Einstecken der Batteriezellen (1) in das mindestens eine Montagegitter (10,20) ausgebildet wird, welche (10,20,1) in den Innenraum des Batteriesystemgehäuses (30) beziehungsweise der Vergussform (60) eingebracht wird, und/oder wobei die Batteriezellen (1) zwischen die Positionsrippen und/oder Positionsvorsprüngen (31a,31b,31c) in den Innenraum des Batteriesystemgehäuses (30) beziehungsweise der Vergussform (60) eingesteckt werden, und/oder
wobei die Batteriezellen (1) von dem Montagegreifer ergriffen werden und durch den Montagegreifer in den Innenraum des Batteriesystemgehäuse (30) oder der Vergussform (60) eingebracht werden.

5. Verfahren nach einem der Ansprüche 1 bis 4, wobei, insbesondere vor dem Einbringen der Batteriezellen (1), weiterhin mindestens eine Temperiermittelleitung (51;53,53') in den Innenraum des Batteriesystemgehäuses (30) oder der Vergussform (60) eingebracht wird, wobei auch die mindestens eine Temperiermittelleitung (51;53,53') zumindest teilweise mit mindestens einer Vergussmasse (40;41,42) vergossen wird.

6. Verfahren nach Anspruch 5, wobei die mindestens eine Temperiermittelleitung (51;53,53') seitlich und/oder unterhalb der Batteriezellen (1) angeordnet wird, insbesondere wobei die mindestens eine Temperiermittelleitung (51;53,53') an einer Innenfläche mindestens einer Seitenwand (30b,30b',60b,60b') und/oder eines Bodens (30a,60a) des Batteriesystemgehäuses (30) beziehungsweise der Vergussform (60) angeordnet, insbesondere befestigt, wird.

7. Verfahren nach einem der Ansprüche 1 bis 4, wobei das Batteriesystemgehäuse (30) beziehungsweise die Vergussform (60) aus einem Grundkörper (30*,60*) und mindestens einer, den Innenraum des Batteriesystemgehäuses (30) beziehungsweise der Vergussform (60) begrenzenden, insbesondere als Seitenwand und/oder Boden des Batteriesystemgehäuses beziehungsweise Vergussform dienenden, Temperierplatte (50;52,52') zusammengesetzt wird, wobei auch die mindestens eine Temperierplatte (50;52,52') zumindest teilweise mit mindestens einer Vergussmasse (40;41,42) vergossen wird.

8. Verfahren nach einem der Ansprüche 3 bis 7,
wobei der mindestens eine temperiermittelbeabstandende Zwischenraum (Z_{T}) mit einer ersten Vergussmasse (41) und der mindestens eine batteriezellenbeabstandende Zwischenraum (Z_{B}) und/oder der mindestens eine gehäuse- oder vergussformbeabstandenden Zwischenraum (Z_{G}) mit einer zweiten Vergussmasse, insbesondere nass-in-nass, gefüllt wird, oder wobei in dem mindestens einen temperiermittelbeabstandende Zwischenraum (Z_{T}) ein Halbzeug (70), insbesondere eine Elastomermatte oder ein Elastomerkissen, angeordnet wird und der mindestens eine batteriezellenbeabstandende Zwischenraum (Z_{B}) und/oder der mindestens eine gehäuse- oder vergussformbeabstandende Zwischenraum (Z_{G}) mit einer Vergussmasse (40) gefüllt wird, oder
wobei der mindestens eine temperiermittelbeabstandende Zwischenraum (Z_{T}), der mindestens eine batteriezellenbeabstandende Zwischenraum (Z_{B}) und der mindestens eine gehäuse- oder vergussformbeabstandende Zwischenraum (Z_{G}) mit einer Vergussmasse gefüllt werden.

9. Batteriesystem (10), umfassend Batteriezellen (1),
- wobei die Batteriezellen (1) durch mindestens ein Montagegitter (10,20) zur Positionierung von Batteriezellen (1) und/oder durch Positionsrippen und/oder Positionsvorsprünge (31a,31b,31c) im Innenraum eines Batteriesystemgehäuses (30), welche (31a,31b,31c) zur Positionierung von Batteriezellen (1) ausgelegt sind, positioniert sind, und/oder
- wobei seitlich und/oder unterhalb der Batteriezellen (1) mindestens eine Temperiermittelleitung (51,53,53') angeordnet ist; und/oder
- wobei mindestens eine Temperierplatte (50;52,52') mindestens eine Seitenwand und/oder den Boden eines beziehungsweise des Batteriesystemgehäuses (30) und/oder einer, die Batteriezellen (1) umfassenden Vergussmasseneinheit (1,40;41,42,50;52,52') bildet,
wobei die Batteriezellen (1) und das mindestens eine Montagegitter (10,20) und/oder die Positionsrippen und/oder Positionsvorsprünge (31a,31b,31c) des Batteriesystemgehäuses (30) und/oder die mindestens eine Temperiermittelleitung (51,53,53') und/oder die mindestens eine Temperierplatte (51,52) zumindest teilweise mit mindestens einer Vergussmasse (40;41,42) vergossen sind, **dadurch gekennzeichnet, dass** die mindestens eine Vergussmasse (40;41,42)
- mindestens ein Epoxidharz auf Basis von Bisphenol A und/oder Bisphenol F,
- eine Bisphenol-A- und/oder -F-Epoxid, insbesondere Bisphenol-A-Epoxid, basierte Formulierung mit Silikonelastomerpartikeln, und
- mindestens einen Aminhärter
umfasst,
wobei in der Formulierung Epoxid-Einheiten chemisch mit Silikon-Einheiten verbunden sind, wobei die Formulierung Silikonelastomerpartikel umfasst, deren Inneres durch Silikon-Einheiten und deren Äußeres durch Epoxid-Einheiten ausgebildet ist.

10. Batteriesystem (10) nach Anspruch 9, wobei das mindestens eine Montagegitter (10,20) und/oder die Positionsrippen und/oder Positionsvorsprünge (31a,31b,31c) des Batteriesystemgehäuses (30) und/oder das Batteriesystemgehäuse (30) und/oder die mindestens eine Temperiermittelleitung (51,53,53') und/oder die mindestens eine Temperierplatte (50;52,52') aus Kunststoff ausgebildet ist.

11. Batteriesystem (10) nach Anspruch 9 oder 10, wobei die Batteriezellen (1), insbesondere durch das mindestens eine Montagegitter (10,20) und/oder durch die Positionsrippen und/oder Positionsvorsprünge (31a,31b,31c) des Batteriesystemgehäuses (30), unter Ausbildung mindestens eines batteriezellenbeabstandenden Zwischenraums (Z_{B}) beabstandet zueinander und/oder unter Ausbildung mindestens eines gehäuse- oder vergussmasseneinheitaußenseitebeabstandende Zwischenraums (Z_{G}) beabstandet zu dem Batteriesystemgehäuse (30) oder zu einer Außenseite der, die Batteriezellen umfassenden Vergussmasseneinheit (1,40;41,42) und/oder unter Ausbildung mindestens eines temperiermittelbeabstandenden Zwischenraums (Z_{T}) beabstandet zu einem Temperiermittel, insbesondere der mindestens einen Temperiermittelleitung (51;53,53') und/oder Temperiermittelplatte (50;52,52'), positioniert sind, wobei der mindestens eine batteriezellenbeabstandende Zwischenraum (Z_{B}) und/oder der mindestens eine gehäuse- oder vergussmasseneinheitaußenseitebeabstandende Zwischenraum (Z_{G}) und/oder der mindestens eine temperiermittelbeabstandende Zwischenraum (Z_{T}) mit mindestens einer Vergussmasse (40;41,42) gefüllt ist.

12. Batteriesystem (10) nach einem der Ansprüche 9 bis 11,
wobei das mindestens eine Montagegitter (10,20) Gitteröffnungen (11,21) aufweist, in welche jeweils eine Batteriezelle (1) eingesteckt ist, und/oder wobei das Batteriesystem (10) ein oberes Montagegitter (10) zur Positionierung von Batteriezellen (1) und ein unteres Montagegitter (20) zur Positionierung von Batteriezellen (1) aufweist, insbesondere wobei die Gitteröffnungen (11) des oberen Montagegitters (10) derart ausgestaltet sind, dass darin die Pole (2) der Batteriezellen (1) und insbesondere auch die Sicherheitsventile (3) der Batteriezellen (1) offen liegen.

13. Batteriesystem nach Anspruch 11 oder 12,
wobei der mindestens eine temperiermittelbeabstandende Zwischenraum (Z_{T}) mit einer ersten Vergussmasse (41) und der mindestens eine batteriezellenbeabstandende Zwischenraum (Z_{B}) sowie der mindestens eine gehäuse- oder vergussmasseneinheitaußenseitebeabstandende Zwischenraum (Z_{G}) mit einer zweiten Vergussmasse (42) gefüllt ist, oder wobei in dem mindestens einen temperiermittelbeabstandende Zwischenraum (Z_{T}) ein Halbzeug (70), insbesondere eine Elastomermatte oder ein Elastomerkissen, angeordnet ist und der mindestens eine batteriezellenbeabstandende Zwischenraums (Z_{B}) und/oder der mindestens eine gehäuse- oder vergussmasseneinheitaußenseitebeabstandende Zwischenraum (Z_{G}) mit einer Vergussmasse (40) gefüllt ist, oder
wobei der mindestens eine temperiermittelbeabstandende Zwischenraum (Z_{T}), der mindestens eine batteriezellenbeabstandende Zwischenraum (Z_{B}) und der mindestens eine gehäuse- oder vergussmasseneinheitaußenseitebeabstandende Zwischenraum (Z_{G}) mit einer Vergussmasse (40) gefüllt ist.

14. Batteriesystem nach einem der Ansprüche 9 bis 13, wobei die Batteriezellen (1) jeweils ein, insbesondere festes beziehungsweise starres, metallisches Zellgehäuse aufweisen.

## Claims

1. Process for the production of a battery system in which battery cells (1)
- are positioned via at least one assembly grid (10, 20) for the positioning of battery cells (1) and/or via positioning ribs and/or positioning protuberances (31a, 31b, 31c) in the internal space of a battery system housing (30) or of a casting mould (60), these (31a, 31b, 31c) being designed for the positioning of battery cells (1), and/or via an assembly gripper for the positioning of battery cells (1) and
- are at least in part resin-encapsulated by at least one potting composition (40; 41, 42), **characterized in that** the at least one potting composition
(40; 41, 42) comprises
- at least one epoxy resin based on bisphenol A and/or bisphenol F,
- a bisphenol-A- and/or -F-epoxy-based, in particular bisphenol-A-epoxy-based, formulation with silicone elastomer particles, and
- at least one amine hardener,
where epoxy units in the formulation have chemical bonding to silicone units, in particular which form the silicone elastomer particles, where the formulation comprises silicone elastomer particles whose interior is constituted by silicone units and whose exterior is constituted by epoxy units.

2. Process according to Claim 1, wherein the battery cells (1) are introduced into the internal space of a, or the, battery system housing (30) or of a, or the, casting mould (60), and/or the internal space of the battery system housing (30) or of the casting mould (60) is at least in part filled by at least one potting composition.

3. Process according to Claim 1 or 2, where, via the at least one assembly grid (10, 20) and/or via the positioning ribs and/or positioning protuberances (31a, 31b, 31c) and/or via the assembly gripper, the battery cells (1) are positioned with spacing from one another with formation of at least one battery-cells-spacing interstice (Z_{B}), and/or with spacing from a/the battery system housing (30) and, respectively, from a/the casting mould (60) with formation of at least one housing- or casting-mould-spacing interstice (Z_{G}), and/or with spacing from a temperature-control means (50, 51, 52, 52', 53, 53') with formation of at least one temperature-control-means-spacing interstice (Z_{T}), where, in particular after the introduction and positioning of the battery cells (1), at least one potting composition (40; 41, 42) is introduced into the at least one battery-cells-spacing interstice (Z_{B}) and/or the at least one housing- or casting-mould-spacing interstice (Z_{G}) and/or the at least one temperature-control-means-spacing interstice (Z_{T}).

4. Process according to any of Claims 1 to 3,
where the battery cells (1) are inserted into the at least one assembly grid (10, 20), in particular into an upper assembly grid (10) for the positioning of battery cells (1) and into a lower assembly grid (20) for the positioning of battery cells (1), in particular where insertion of the battery cells (1) into the at least one assembly grid (10, 20) forms an assembly-grid-battery-cells arrangement (10, 20, 1) which (10, 20, 1) is introduced into the internal space of the battery system housing (30) and, respectively of the casting mould (60), and/or where the battery cells (1) are inserted between the positioning ribs and/or positioning protuberances (31a, 31b, 31c) into the internal space of the battery system housing (30) and, respectively, of the casting mould (60), and/or where the battery cells (1) are gripped by the assembly gripper and are introduced by the assembly gripper into the internal space of the battery system housing (30) or of the casting mould (60).

5. Process according to any of Claims 1 to 4, where, in particular before the introduction of the battery cells (1), at least one temperature-control-means conduit (51; 53, 53') is moreover introduced into the internal space of the battery system housing (30) or of the casting mould (60), where the at least one temperature-control-means conduit (51; 53, 53') is also at least in part resin-encapsulated by at least one potting composition (40; 41, 42).

6. Process according to Claim 5, where the at least one temperature-control-means conduit (51; 53, 53') is arranged alongside and/or below the battery cells (1), in particular where the at least one temperature-control-means conduit (51; 53, 53') is arranged, in particular secured, on an internal surface of at least one side wall (30b, 30b', 60b, 60b') and/or base (30a, 60a) of the battery system housing (30) and, respectively, of the casting mould (60) .

7. Process according to any of Claims 1 to 4, where the battery system housing (30) and, respectively, the casting mould (60) are composed of a main body (30*, 60*) and of at least one temperature-control plate (50; 52, 52') which delimits the internal space of the battery system housing (30) and, respectively, of the casting mould (60), and in particular serves as side wall and/or base of the battery system housing and, respectively, casting mould, where the at least one temperature-control plate (50; 52, 52') is also at least in part resin-encapsulated by at least one potting composition (40; 41, 42).

8. Process according to any of Claims 3 to 7,
where a first potting composition (41) is introduced into the at least one temperature-control-means-spacing interstice (Z_{T}) and a second potting composition is introduced, in particular wet-in-wet, into the at least one battery-cells-spacing interstice (Z_{B}) and/or into the at least one housing- or casting-mould-spacing interstice (Z_{G}), or where a semifinished product (70), in particular an elastomer mat or an elastomer pad, is arranged in the at least one temperature-control-means-spacing interstice (Z_{T}) and a potting composition (40) is introduced into the at least one battery-cells-spacing interstice (Z_{B}) and/or into the at least one housing- or casting-mould-spacing interstice (Z_{G}), or
where a potting composition is introduced into the at least one temperature-control-means-spacing interstice (Z_{T}), the at least one battery-cells-spacing interstice (Z_{B}) and the at least one housing- or casting-mould-spacing interstice (Z_{G}).

9. Battery system (10),
comprising battery cells (1),
- where the battery cells (1) are positioned via at least one assembly grid (10, 20) for the positioning of battery cells (1) and/or via positioning ribs and/or positioning protuberances (31a, 31b, 31c) in the internal space of a battery system housing (30), where these (31a, 31b, 31c) are designed for the positioning of battery cells (1), and/or
- where at least one temperature-control-means conduit (51, 53, 53') is arranged alongside and/or below the battery cells (1), and/or
- where at least one temperature-control plate (50; 52, 52') forms at least one side wall and/or the base of a/the battery system housing (30) and/or of a potting-compositions unit (1, 40; 41, 42, 50; 52, 52') comprising the battery cells (1),
where the battery cells (1) and the at least one assembly grid (10, 20) and/or the positioning ribs and/or positioning protuberances (31a, 31b, 31c) of the battery system housing (30) are at least in part resin-encapsulated by at least one potting composition (40; 41, 42) and/or the at least one temperature-control-means conduit (51, 53, 53') and/or the at least one temperature-control plate (51, 52) is/are at least in part resin-encapsulated by at least one potting composition (40; 41, 42), **characterized in that** the at least one potting composition (40; 41, 42) comprises
- at least one epoxy resin based on bisphenol A and/or bisphenol F,
- a bisphenol-A- and/or -F-epoxy-based, in particular bisphenol-A-epoxy-based, formulation with silicone elastomer particles, and
- at least one amine hardener,
where epoxy units in the formulation have chemical bonding to silicone units,
where the formulation comprises silicone elastomer particles whose interior is constituted by silicone units and whose exterior is constituted by epoxy units.

10. Battery system (10) according to Claim 9, where the at least one assembly grid (10, 20) and/or the positioning ribs and/or positioning protuberances (31a, 31b, 31c) of the battery system housing (30) is/are formed from plastic, and/or the battery system housing (30) and/or the at least one temperature-control-means conduit (51, 53, 53') and/or the at least one temperature-control plate (50; 52, 52') is/are formed from plastic.

11. Battery system (10) according to Claim 9 or 10, where, in particular via the at least one assembly grid (10, 20) and/or via the positioning ribs and/or positioning protuberances (31a, 31b, 31c) of the battery system housing (30), the battery cells (1) are positioned with spacing from one another with formation of at least one battery-cells-spacing interstices (Z_{B}), and/or with spacing from the battery system housing (30) or from an external side of the potting-compositions unit (1, 40; 41, 42) comprising the battery cells with formation of at least one housing- or potting-compositions-unit-external-side-spacing interstice (Z_{G}), and/or with spacing from a temperature-control means, in particular from the at least one temperature-control-means conduit (51; 53, 53') and/or temperature-control-means plate (50; 52, 52') with formation of at least one temperature-control-means-spacing interstice (Z_{T}), where at least one potting composition (40; 41, 42) has been introduced into the at least one battery-cells-spacing interstice (Z_{B}) and/or the at least one housing- or potting-compositions-unit-external-side-spacing interstice (Z_{G}) and/or the at least one temperature-control-means-spacing interstice (Z_{T}).

12. Battery system (10) according to any of Claims 9 to 11,
where the at least one assembly grid (10, 20) has grid apertures (11, 21) into which respectively a battery cell (1) has been inserted, and/or where the battery system (10) has an upper assembly grid (10) for the positioning of battery cells (1) and has a lower assembly grid (20) for the positioning of battery cells (1), in particular where the grid apertures (11) of the upper assembly grid (10) are designed in a manner such that the terminals (2) of the battery cells (1), and in particular also the safety valves (3) of the battery cells (1), are exposed therein.

13. Battery system according to Claim 11 or 12,
where a first potting composition (41) is introduced into the at least one temperature-control-means-spacing interstice (Z_{T}) and a second potting composition (42) is introduced into the at least one battery-cells-spacing interstice (Z_{B}) and the at least one housing- or potting-compositions-unit-external-side-spacing interstice (Z_{G}), or
where a semifinished product (70), in particular an elastomer mat or an elastomer pad, is arranged in the at least one temperature-control-means-spacing interstice (Z_{T}) and a potting composition (40) is introduced into the at least one battery-cells-spacing interstice (Z_{B}) and/or into the at least one housing- or potting-compositions-unit-external-side-spacing interstice (Z_{G}), or
where a potting composition (40) is introduced into the at least one temperature-control-means-spacing interstice (Z_{T}), the at least one battery-cells-spacing interstice (Z_{B}) and the at least one housing- or potting-compositions-unit-external-side-spacing interstice (Z_{G}).

14. Battery system according to any of Claims 9 to 13,
where the battery cells (1) preferably have a respective metallic cell housing that is in particular solid and, respectively, rigid.

## Revendications

1. Procédé de fabrication d'un système de batterie dans lequel des éléments de batterie (1)
- sont positionnés par au moins une grille de montage (10, 20) destinée à positionner des éléments de batterie (1) et/ou par des nervures de positionnement et/ou des saillies de positionnement (31a, 31b, 31c) situées dans l'espace intérieur d'un boîtier de système de batterie (30) ou d'un moule d'enrobage (60), lesquelles (31a, 31b, 31c) sont conçues pour positionner des éléments de batterie (1), et/ou par un moyen de préhension et de montage destiné à positionner des éléments de batterie (1) et
- sont enrobés au moins partiellement avec au moins un composé d'enrobage (40 ; 41, 42), **caractérisé en ce que** l'au moins un composé d'enrobage (40 ; 41, 42) comprend
- au moins une résine époxy à base de bisphénol A et/ou de bisphénol F,
- une formulation à base d'époxy de bisphénol A et/ou F, en particulier d'époxy de bisphénol-A et pourvue de particules d'élastomère de silicone, et
- au moins un durcisseur à base d'amine,
des unités époxy étant liées chimiquement dans la formulation à des unités silicone qui forment notamment les particules d'élastomère de silicone, la formulation comprenant des particules d'élastomère de silicone dont l'intérieur est formé d'unités silicone et dont l'extérieur est formé d'unités époxy.

2. Procédé selon la revendication 1, les éléments de batterie (1) situés étant insérés dans l'espace intérieur d'un boîtier de système de batterie (30) ou d'un ou du moule d'enrobage (60) et/ou l'espace intérieur du boîtier de système de batterie (30) et du moule d'enrobage (60) étant rempli au moins partiellement avec au moins un composé d'enrobage.

3. Procédé selon la revendication 1 ou 2, les éléments de batterie (1) étant positionnés à distance les uns des autres par l'au moins une grille de montage (10, 20) et/ou par les nervures de positionnement et/ou les saillies de positionnement (31a, 31b, 31c) et/ou par le moyen de préhension et de montage en ménageant au moins un intervalle d'espacement d'éléments de batterie (Z_{B}) et/ou en ménageant au moins un intervalle d'espacement de boîtier ou de moule d'enrobage (Z_{G}) situé à distance d'un ou du boîtier de système de batterie (30) ou d'un ou du moule d'enrobage (60) et/ou en ménageant au moins un intervalle d'espacement de milieu de régulation de température (Z_{T}) situé à distance d'un milieu de régulation de température (50, 51, 52, 52', 53, 53'), l'au moins un intervalle d'espacement d'éléments de batterie (Z_{B}) et/ou l'au moins un intervalle d'espacement de boîtier ou de moule d'enrobage (Z_{G}) et/ou l'au moins un intervalle d'espacement de milieu de régulation de température (Z_{T}), étant remplis avec au moins un composé d'enrobage (40 ; 41, 42), en particulier après l'insertion et le positionnement des éléments de batterie (1).

4. Procédé selon l'une des revendications 1 à 3, les éléments de batterie (1) étant insérés dans l'au moins une grille de montage (10, 20), en particulier dans une grille de montage supérieure (10) destinée à positionner des éléments de batterie (1) et dans une grille de montage inférieure (20) destinée à positionner des éléments de batterie (1), en particulier un ensemble d'éléments de batterie et de grille de montage (10, 20, 1) étant formé par insertion d'éléments de batterie (1) dans l'au moins une grille de montage (10, 20), lequel (10, 20, 1) est inséré à l'intérieur du boîtier de système de batterie (30) ou du moule d'enrobage (60), et/ou les éléments de batterie (1) étant insérés dans l'espace intérieur du boîtier de système de batterie (30) ou du moule d'enrobage (60) entre les nervures de positionnement et/ou les saillies de positionnement (31a, 31b, 31c), et/ou les éléments de batterie (1) étant saisis par le moyen de préhension et de montage et étant introduits par le moyen de préhension et de montage dans l'espace intérieur du boîtier de système de batterie (30) ou du moule d'enrobage (60).

5. Procédé selon l'une des revendications 1 à 4, en particulier avant l'insertion des éléments de batterie (1), au moins une conduite d'agent de régulation de température (51 ; 53, 53') étant introduite dans l'espace intérieur du boîtier de système de batterie (30) ou du moule d'enrobage (60), de même l'au moins une conduite d'agent de régulation de température (51 ; 53, 53') étant enrobée au moins partiellement avec au moins un composé d'enrobage (40 ; 41, 42).

6. Procédé selon la revendication 5, l'au moins une conduite d'agent de régulation de température (51 ; 53, 53') étant disposée latéralement et/ou au-dessous des éléments de batterie (1), en particulier l'au moins une conduite d'agent de régulation de température (51 ; 53, 53') étant disposée, notamment fixée, à une surface intérieure d'au moins une paroi latérale (30b, 30b', 60b, 60b') et/ou d'un fond (30a, 60a) du boîtier de système de batterie (30) ou du moule d'enrobage (60).

7. Procédé selon l'une des revendications 1 à 4, le boîtier de système de batterie (30) ou le moule d'enrobage (60) étant composé d'un corps de base (30*, 60*) et d'au moins une plaque de régulation de température (50 ; 52, 52') qui délimite l'espace intérieur du boîtier de système de batterie (30) ou du moule d'enrobage (60), en particulier qui sert de paroi latérale et/ou de fond du boîtier de système de batterie ou du moule d'enrobage, de même l'au moins une plaque de régulation de température (50 ; 52, 52') étant au moins partiellement enrobée d'au moins un composé d'enrobage (40 ; 41, 42).

8. Procédé selon l'une des revendications 3 à 7, l'au moins un intervalle d'espacement d'agent de régulation de température (Z_{T}) étant rempli avec un premier composé d'enrobage (41) et l'au moins un intervalle d'espacement d'éléments de batterie (Z_{B}) et/ou l'au moins un intervalle d'espacement de boîtier ou de moule d'enrobage (Z_{G}) étant rempli avec un deuxième composé d'enrobage, notamment de manière humide à humide, ou un produit semi-fini (70), en particulier un tapis en élastomère, ou un coussin en élastomère, étant disposé dans l'au moins un intervalle d'espacement d'agent de régulation de température (Z_{T}), et l'au moins un intervalle d'espacement d'éléments de batterie (Z_{B}) et/ou l'au moins un intervalle d'espacement de boîtier ou de moule d'enrobage (Z_{G}) étant remplis avec un composé d'enrobage (40), ou l'au moins un intervalle d'espacement d'agent de régulation de température (Z_{T}), l'au moins un intervalle d'espacement d'éléments de batterie (Z_{B}) et l'au moins un intervalle d'espacement de boîtier et ou de moule d'enrobage (Z_{G}) étant remplis avec un composé d'enrobage.

9. Système de batterie (10), comprenant des éléments de batterie (1),
- les éléments de batterie (1) étant positionnés par au moins une grille de montage (10, 20) destinée à positionner des éléments de batterie (1) et/ou par des nervures de positionnement et/ou des saillies de positionnement (31a, 31b, 31c) situées dans l'espace intérieur d'un boîtier de système de batterie (30), lesquelles (31a, 31b, 31c) sont conçues pour positionner des éléments de batterie (1), et/ou
- au moins une conduite d'agent de régulation de température (51 ; 53, 53') étant disposée latéralement et/ou au-dessous des éléments de batterie (1),
- au moins une plaque de régulation de température (50 ; 52, 52') formant au moins une paroi latérale et/ou le fond d'un ou du boîtier de système de batterie ou d'une unité de composé d'enrobage (1, 40 ; 41, 42, 50 ; 52, 52') comprenant les éléments de batterie (1), les éléments de batterie (1) et l'au moins une grille de montage (10,20) et/ou les nervures de positionnement et/ou les saillies de positionnement (31a, 31b, 31c) du boîtier de système de batterie (30) et/ou l'au au moins une conduite d'agent de régulation de température (51, 53, 53') et/ou l'au moins une plaque de régulation de température (51, 52) étant au moins partiellement enrobés d'au moins un composé d'enrobage (40 ; 41, 42), **caractérisé en ce que** l'au moins un composé d'enrobage (40 ; 41, 42) comprend
- au moins une résine époxy à base de bisphénol A et/ou de bisphénol F,
- une formulation à base d'époxy de bisphénol A et/ou F, en particulier d'époxy de bisphénol-A et pourvue de particules d'élastomère de silicone, et
- au moins un durcisseur à base d'amine,
des unités époxy étant liées chimiquement dans la formulation à des unités silicone, la formulation comprenant des particules d'élastomère de silicone dont l'intérieur est formé d'unités silicone et dont l'extérieur est formé d'unités époxy.

10. Système de batterie (10) selon la revendication 9, l'au moins une grille de montage (10, 20) et/ou les nervures de positionnement et/ou les saillies de positionnement (31a, 31b, 31c) du boîtier de système de batterie (30) et/ou du boîtier de système de batterie (30) et/ou l'au moins une conduite d'agent de régulation de température (51, 53, 53') et/ou l'au moins une plaque de régulation de température (50 ; 52, 52') est/sont en matière synthétique.

11. Système de batterie (10) selon la revendication 9 ou 10, les éléments de batterie (1) étant positionnés, en particulier par l'au moins une grille de montage (10, 20) et/ou par les nervures de positionnement et/ou les saillies de positionnement (31a, 31b, 31c) du boîtier de système de batterie (30), en ménageant au moins un intervalle d'espacement d'éléments de batterie (Z_{B}) situé à distance les uns des autres et/ou en ménageant au moins un intervalle d'espacement de boîtier ou de côté extérieur d'unité de composé d'enrobage (Z_{G}) situé à distance du boîtier de système de batterie (30) ou d'un côté extérieur de l'unité de composé d'enrobage (1, 40 ; 41, 42) comprenant les éléments de batterie et/ou en ménageant au moins un intervalle d'espacement d'agent de régulation de température (Z_{T}) situé à distance d'un agent de régulation de température, en particulier de l'au moins une conduite d'agent de régulation de température (51 ; 53, 53') et/ou plaque d'agent de régulation de température (50 ; 52, 52'), l'au moins un intervalle d'espacement d'éléments de batterie (Z_{B}) et/ou l'au moins un intervalle d'espacement de côté extérieur de boîtier ou d'unité de composé d'enrobage (Z_{G}) et/ou l'au moins un intervalle d'espacement d'agent de régulation de température (Z_{T}) étant remplis avec au moins un composé d'enrobage (40 ; 41, 42).

12. Système de batterie (10) selon l'une des revendications 9 à 11, l'au moins une grille de montage (10, 20) comportant des ouvertures de grille (11, 21) dans chacune desquelles un élément de batterie (1) est inséré, et/ou le système de batterie (10) comportant une grille de montage supérieure (10) destinée à positionner des éléments de batterie (1) et une grille de montage inférieure (20) destinée à positionner des éléments de batterie (1), en particulier les ouvertures de grille (11) de la grille de montage supérieure (10) étant conçues de telle sorte que les pôles (2) des éléments de batterie (1) et en particulier également les soupapes de sécurité (3) des éléments de batterie (1) soit ouverts.

13. Système de batterie selon la revendication 11 ou 12, l'au moins un intervalle d'espacement d'agent de régulation de température (Z_{T}) étant rempli avec un premier composé d'enrobage (41) et l'au moins un intervalle d'espacement d'éléments de batterie (Z_{B}) et l'au moins un intervalle d'espacement de boîtier ou de côté extérieur d'unité d'enrobage (Z_{G}) étant rempli avec un deuxième composé d'enrobage (42), ou un produit semi-fini (70), en particulier un tapis en élastomère ou un coussin en élastomère, étant disposé dans l'au moins un intervalle d'agent de régulation de température (Z_{T}) et l'au moins un intervalle d'espacement d'éléments de batterie (Z_{B}) et/ou l'au moins un intervalle d'espacement de boîtier ou de côté extérieur d'unité de composé d'enrobage (Z_{G}) étant rempli avec un composé d'enrobage (40), ou l'au moins un intervalle d'espacement d'agent de régulation de température (Z_{T}), l'au moins un intervalle d'espacement d'éléments de batterie (Z_{B}) et l'au moins un intervalle d'espacement de boîtier ou de côté extérieur de composé d'enrobage (Z_{G}) étant rempli avec un composé d'enrobage (40) .

14. Système de batterie selon l'une des revendications 9 à 13, les éléments de batterie (1) comportant chacun un boîtier d'élément métallique, en particulier, solide ou rigide.
